(19)

Europäisches
Patentamt
European
Patent Office
Office européen
des brevets

(11) **EP 4 492 028 A1**

(12) **EUROPEAN PATENT APPLICATION**

(43) Date of publication:
**15.01.2025 Bulletin 2025/03**

(21) Application number: **23184955.5**

(22) Date of filing: **12.07.2023**

(51) International Patent Classification (IPC):
**G01L 5/16** (2020.01)          **G01L 5/22** (2006.01)
**G01L 19/00** (2006.01)         **B25J 13/08** (2006.01)

(52) Cooperative Patent Classification (CPC):
**G01L 19/0092; B25J 13/084; G01L 5/16;**
**G01L 5/228**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
• **THURNER, Thomas**
  **8044 Graz (AT)**
• **KAMMERHOFER, Thomas**
  **8010 Graz (AT)**

(74) Representative: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(54) **SENSOR ELEMENT AND CONTACT FORCE SENSOR DEVICE**

(57) This application concerns a sensor element and a contact force sensor device comprising the sensor element. The sensor element, comprises a plurality of mechanically coupled sensor cells each having a sealed inner volume within an at least partially flexible cell housing. The flexible cell housing comprises a flexible outer cover and flexible cell boundaries between adjacent sensor cells. Further the sensor element comprises at least one pressure sensor element. Each sealed inner volume is fluidically coupled to at least one of the at least one pressure sensor element.

Fig. 1

EP 4 492 028 A1

## Description

## Technical Field

Embodiments related to a sensor element and a contact force sensor device.

## Background

The robotics market is booming, benefiting from an ever-increasing demand and ever more advanced technologies. With the rise of artificial intelligence (AI), robots are becoming increasingly intelligent and can perform complex interactions with humans and their environments. These interactions are made possible by the ever more refined processing of stimuli from the robot's environment. These stimuli are perceived by sensors. However, if there is a sense that robots do not easily obtain, it is the sense of touch. To succeed in producing soft surfaces capable of perceiving pressure and their directions, temperature, or even pain are the challenges that the robotic skin or e-skin try to answer.

Tactile sensing for robotic systems - in particular robotic or prosthetic hands or fingers - is a quite complex topic, since requiring:

a) A huge dynamic range for force/pressure sensing to be able to handle proper sensing of lowest tactile forces/pressures from delicate object interactions and situations (e.g., interaction with an egg or sensing an air flow) up to high forces/applied external pressure (for lifting/carrying heavier objects with robotic arm/fingers)

b) High spatial sensing resolution to provide recognition of objects and situations

c) a soft, rubber-like nature to provide proper grip, and to simulate human skin perception

Existing solutions are based on direct force-sensors, deformation-sensors or piezosensors, each having drawbacks with regard to the above three relevant requirements on tactile solutions for robotic skin/hands.

The herein described sensor element and contact force sensor device solves for all three requirements on tactile robotic sensing, and, for example, could be extended by AI based sensor fusion/processing locally and/or centrally. Further, the high dynamic range and low power consumption of the herein described sensor element and contact force sensor device are perfectly matching the needs in target applications

As described above, it is desired to provide a concept which makes a better compromise between increasing a dynamic range for force and/or pressure sensing, increasing a spatial resolution at the force and/or pressure sensing, stimulating as realistically as possible a human skin perception and reducing a power consumption. In addition to robotic use-cases, also other applications like pressure sensitive mats, floors, shoe inlets etc. in consumer, industrial and medical areas are benefitting from the proposed embodiments with soft and highly dynamic spatially resolving touch / pressure sensing.

This is achieved by the subject matter of the independent claims of the present application.

Further embodiments are defined by the subject matter of the dependent claims of the present application.

## Summary

In accordance with an aspect of the present disclosure, the inventors realized that one problem encountered when trying to detect a force and/or a pressure stems from the fact that most sensors are direct force sensors not sensible for shear forces. According to this aspect of the present disclosure, this difficulty is overcome by providing a sensor element with mechanically coupled sensor cells. For example, the sensor element has an at least partially flexible housing divided into sub-cells by flexible walls. Adjacent sensor cells of the sensor element share a flexible wall/boundary between same. Two adjacent sensor cells may be mechanically coupled via the flexible wall separating the two adjacent sensor cells. This is based on the finding that the mechanical coupling of sensor cells results in high performance multi-directional sensing capabilities. Concurrently, a robust and precise estimation of magnitude and direction of forces acting on the sensor element can be achieved by evaluating a force and/or pressure acting on the individual mechanically coupled sensor cells of the sensor element.

Accordingly, in accordance with an aspect of the present disclosure, a sensor element comprises a plurality, e.g., two or more, of mechanically coupled sensor cells, e.g., sub-cells, each having a sealed inner volume, e.g., a cavity, within an at least partially flexible cell housing. The flexible cell housing comprises a flexible outer cover and flexible cell boundaries, e.g. walls, between adjacent sensor cells. Further the sensor element comprises at least one pressure sensor element, e.g., one or more pressure sensor elements. Each sealed inner volume is fluidically coupled to at least one of the at least one pressure sensor elements. For example, the sensor element comprises a pressure sensor element and each sealed inner volume is fluidically coupled to the pressure sensor element. According to an embodiment, the sensor element may comprise a plurality of pressure sensor elements and each sealed inner volume is fluidically coupled to one of the plurality of pressure sensor elements.

Accordingly, in accordance with a further aspect of the present disclosure, a contact force sensor device comprises a herein described sensor element and a controller configured to read out a momentary pressure information of the one or more of pressure sensor elements of the sensor element and to determine a direction and/or strength, e.g., a vector, of a contact force applied to the sensor element based on the momentary pressure information.

## Brief Description of the Drawings

The drawings are not necessarily to scale, emphasis instead generally being placed upon illustrating the principles of the embodiments. In the following description, various embodiments are described with reference to the following drawings, in which:

Fig. 1      shows an embodiment of a two-cell sensor element with two absolute pressure sensors;

Fig. 2      shows an embodiment of a two-cell sensor element with a differential and an absolute pressure sensor;

Fig. 3      shows an embodiment of a contact force sensor device;

Fig. 4      shows an embodiment of a one dimensional array of sensor elements;

Fig. 5      shows an embodiment of a two dimensional array of sensor elements;

Fig. 6      shows an embodiment of a hemispherical sensor element;

Fig. 7a     shows an embodiment of a hemispherical sensor element with absolute pressure sensors;

Fig. 7b     shows an embodiment of a hemispherical sensor element with absolute and differential pressure sensors;

Fig. 7c     shows an embodiment of a hemispherical sensor element with redundant pressure sensors;

Fig. 8      shows an embodiment, of a sensor element with stacked sensor cells;

Fig. 9      shows an embodiment of a basis sensor cell with a foldable-structure;

Fig. 10     shows an embodiment of a hemispherical sensor element with temperature sensor and/or barometric sensor;

Fig. 11     shows an embodiment of a contact force sensor device with a plurality of sensor elements;

Fig. 12a    shows an embodiment of a sensor array configured for 3D force sensing;

Fig. 12b    shows an embodiment of a sensor array configured for 3D force sensing with an nxn force detection unit;

Fig. 12c    shows an embodiment of a sensor array configured for 3D force sensing with a force detection unit in form of a triangle;

Fig. 13a    shows an embodiment of a sensor array configured for 2D force sensing; and

Fig. 13b    shows an embodiment of a dense sensor array configured for 2D force sensing.

## Detailed Description of the Embodiments

Equal or equivalent elements or elements with equal or equivalent functionality are denoted in the following description by equal or equivalent reference numerals even if occurring in different figures.

In the following description, a plurality of details is set forth to provide a more throughout explanation of embodiments. However, it will be apparent to those skilled in the art that embodiments may be practiced without these specific details. In other instances, well-known structures and devices are shown in block diagram form rather than in detail in order to avoid obscuring embodiments. In addition, features of the different embodiments described herein after may be combined with each other, unless specifically noted otherwise.

In the description of the embodiments, terms and text passages placed in brackets (next to a described element or function) are to be understood as further explanations, exemplary configurations, exemplary additions and/or exemplary alternatives of the described element or function.

For facilitating the description of the different embodiments, some of the figures comprise a Cartesian coordinate system x, y, z, wherein the x-y-plane corresponds, i.e. is parallel, to a first main surface region of a substrate (= a reference plane = x-y-plane), wherein the direction vertically up with respect to the reference plane (x-y-plane) corresponds to the "+z" direction, and wherein the direction vertically down with respect to the reference plane (x-y-plane) corresponds to the "-z" direction. In the following description, the term "lateral" means a direction parallel to the x- and/or y-direction, i.e. parallel to or in the x-y-plane, wherein the term "vertical" means a direction parallel to the z-direction.

The term "flexible" may be understood in this disclosure as reversibly or elastically deformable. For example, a flexible (elastic) object, like a wall, a boundary, a cap or a cover, is deformable and returns to its original position/initial position (initial state) after a deformation.

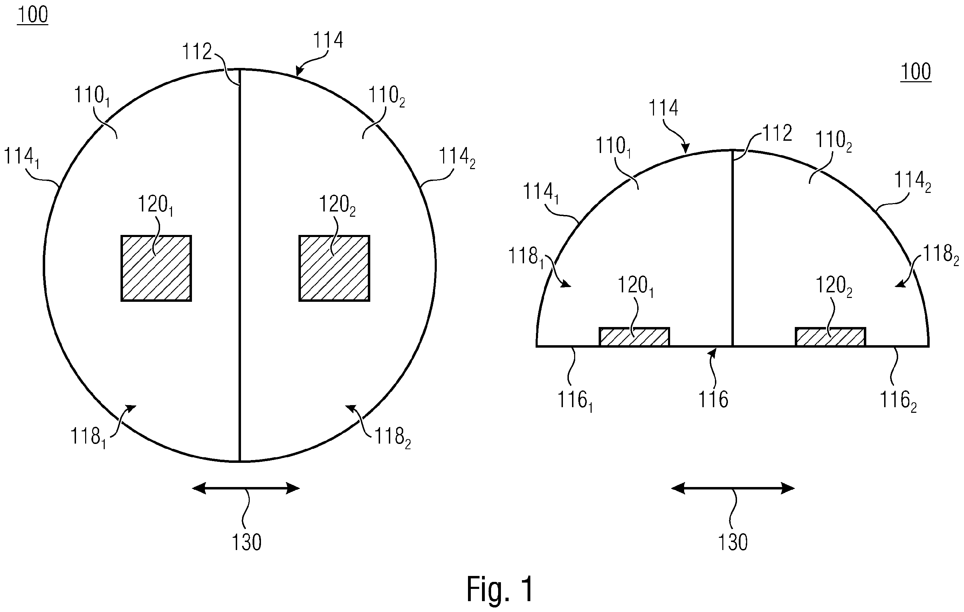

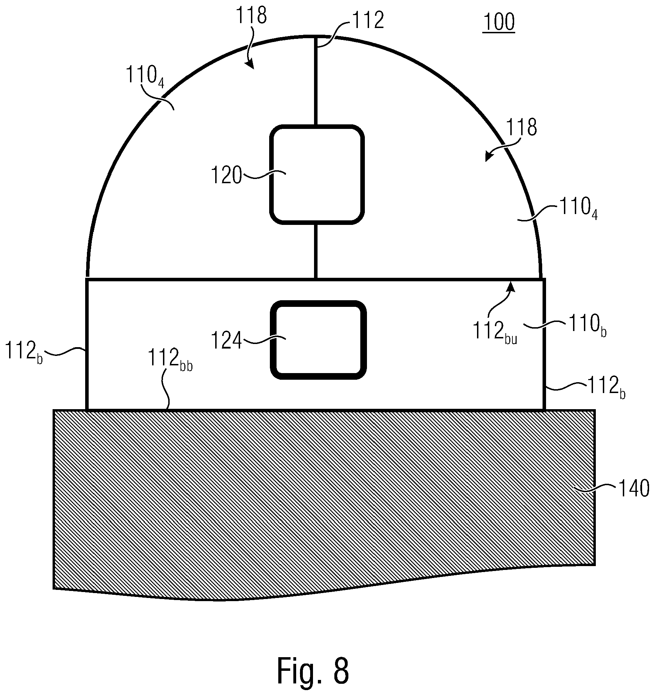

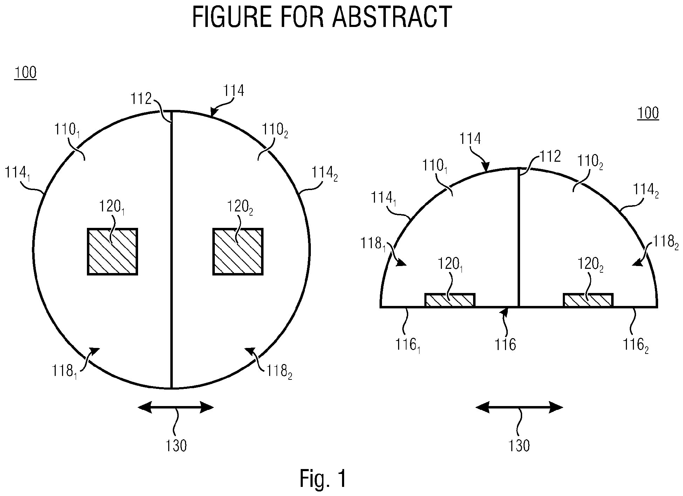

Figures 1 to 7c and Fig. 10 describe exemplarily a sensor element 100 with at least two mechanically coupled sensor cells 110 and at least two pressure sensor elements 120. For each of the at least two mechanically coupled sensor cells 110, the respective sealed inner volume 118 is fluidically coupled to at least one of the at least two pressure sensor elements 120. This implementations are described in order to facilitate the understanding of the underlying concept. Furthermore, as will be described in more detail with regard to Fig. 8 and Fig. 12b to 13b, it is alternatively possible that the sensor element 100 comprises as pressure sensor element 120 only one differential pressure sensor element. For example, the sensor element 100 may comprise two mechanically coupled sensor cells each one fluidically coupled to the differential pressure sensor element.

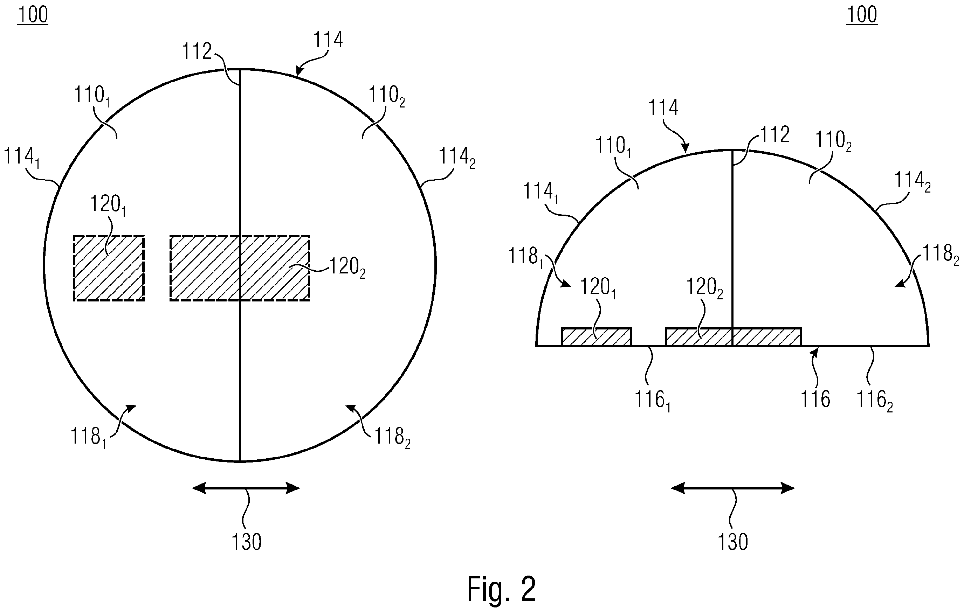

Fig. 1 and Fig. 2 show exemplarily a sensor element 100, e.g., a cell, with two sensor cells $110_1$ and $110_2$, e.g., sub-cells. A top view of the respective sensor element 100 is shown on the left and a side view of the respective sensor element 100 is shown on the right.

The sensor element 100 may have an at least partially flexible housing comprising a flexible cover 114, see the flexible cell cover 114, of the first sensor cell $110_1$ and the flexible cell cover $114_2$ of the second sensor cell $110_2$ and a ground or base 116, see the cell boundaries $116_1$ and $116_2$ at the bottom. The base 116 of the at least partially flexible housing may be flexible or rigid. The flexible cover 114 may also be understood as a flexible outer cover.

An inner volume of the at least partially flexible housing is divided by a flexible cell boundary 112 into two sealed inner volumes. In other words, the flexible cell boundary 112 divides the sensor element 100 into the two sensor cells $110_1$ and $110_2$. The flexible cell boundary 112 is arranged between the two adjacent sensor cells $110_1$ and $110_2$, i.e. separating same. The flexible cell boundary 112 is shared between the two sensor cells $110_1$ and $110_2$. The two sensor cells $110_1$ and $110_2$ are arranged adjacently to each other separated by the common flexible cell boundary 112. The first sensor cell $110_1$ has a cell housing comprising a flexible outer cover, see the flexible cell cover $114_1$, and the flexible cell boundary 112. The second sensor cell $110_2$ has a cell housing comprising a flexible outer cover, see the flexible cell cover $114_2$, and the flexible cell boundary 112.

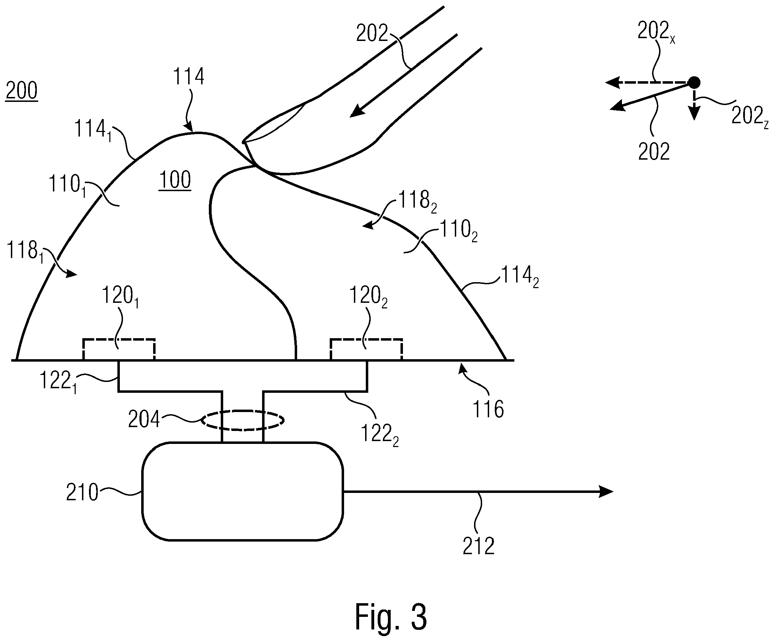

The sensor element 100, for example, has the shape of a spherical segment or a hemisphere, e.g., a semi-sphere or half-sphere or a spherical dome, and the sensor cells 110 represent subdivisions of the spherical segment (hemisphere), e.g., the spherical segment (hemisphere) may be subdivided into, e.g., equally sized, compartments representing the sensor cells 110. The sensor cells 110 may be formed as, e.g., symmetric and/or equally sized, segments (sectors or sections) of a spherical dome. The spherical dome, for example, comprises a spherical cap, i.e. the flexible cover 114, on a circular base area, see the base 116, or on a circular footprint of the sensor element 100. Worth mentioning is that in case of spherical- or rotational-symmetric sensor cell arrangements the estimation of force directions, e.g., by the controller 210 of the contact force sensor device 200 shown in Fig. 3, is easier, having unidirectional sensitivities for the individual force components.

The sensor cells 110 of the herein described sensor elements 100 have exemplarily the shape of a spherical segment or the shape of a segment of a hemisphere, but another shape would also be possible, such as cube-shaped, cuboid-shaped, toroid-shaped (ring-shaped), cylinder-shaped or cone-shaped, for example. The description is equally applicable to sensor elements 100 having the shape of a cube, cuboid, toroid, a cylinder or a cone, for example.

Sensor elements 100 having the shape of a spherical segment or being cone-shaped have the advantage that same provide a smaller contact area than flat sensor elements, like cube-shaped, cuboid-shaped, toroid-shaped (ring-shaped) or cylinder-shaped sensor elements 100. The contact area, e.g., a top area, e.g., an area opposite to the base 116, distributes a contact force to the cells underneath. The dome-like shape of a sensor element 100 distributes a force vector on the contacting top area into shape changes and thus different pressure values in the individual sub-cells, i.e. sensor cells. It has been found that it is advantageous, when the top contact area of a sensor element 100 is smaller than the bottom area of the sensor element 100. The smaller contact area improves an accuracy at a determination of a direction of the contact force, since a dependency of a deformation of the flexible cover 114 from a shape of an object applying the contact force onto the sensor element 100 is significantly reduced. For example, at flat sensor elements 100 a direction reading, i.e. a determined direction of a contact force, could be erroneous when a tilted surface is pressed against a flat cover of the sensor elements, since this may also result in different pressure values in the sensor cells of the sensor element 100, even if the force is only applied vertically from above and has no force component parallel to the base area, see 116.

In contrast, flat sensor elements 100, e.g., with a 1D or 2D array of identical single cubic cells or a cylindrical sensor element 100, have shortcomings with regard to shear force measurement, e.g. in addition to contact force measurement. Such sensor elements 100 would only measure contact force per cell, which might be sufficient for much simpler applications. For such sensor elements 100 one would either chose only absolute pressure sensors, or absolute and differential pressure sensors mixed in a way that each cell pressure can be sensed with sufficient accuracy.

As will be described in more detail with regard to Fig. 3, the sensor cells $110_1$ and $110_2$ of the sensor element 100 are mechanically coupled. Mechanically coupled, for example, means that a deformation of one of the two mechanically coupled sensor cells, e.g. of $110_1$ or $110_2$, may have an impact on the other sensor cell, like a deformation of the other sensor cell. For example, an external force applied to one of the two adjacent sensor cells may deform the flexible cover $114_1$ and $114_2$ of both sensor cells $110_1$ and $110_2$ and/or the flexible cell boundary 112 between the two sensor cells $110_1$ and $110_2$.

The cell housings may be impermeable to fluids. For example, the sensor cells $110_1$ and $110_2$ may be filled with a fluid, like a gas, a liquid or a gel. Each sensor cell may have a sealed inner volume, see $118_1$ and $118_2$, like a cavity, within the at least partially flexible cell housing. The fluid may be sealed within each sensor cell $110_1$ and $110_2$, e.g., within the respective sealed inner volume, see $118_1$ and $118_2$. No fluid crosses the flexible cell boundary 112 between the adjacent sensor cells $110_1$ and $110_2$, i.e. no fluid is exchanged between the adjacent sensor cells $110_1$ and $110_2$.

Further, the sensor element 100 comprises a plurality of pressure sensor elements 120, e.g. pressure sensor units, i.e. two pressure sensor elements $120_1$ and $120_2$. The pressure sensor elements $120_1$ and $120_2$, see Fig. 1 and Fig. 2 on the right, may be arranged at the bottom 116, see 116, and $116_2$, of the housing of the respective sensor element 100. In Fig. 1 the sensor element 100 comprises two absolute pressure sensor elements $120_1$ and $120_2$ and in Fig. 2 the sensor element 100 comprises one absolute pressure sensor element $120_1$ and one differential pressure sensor element $120_2$.

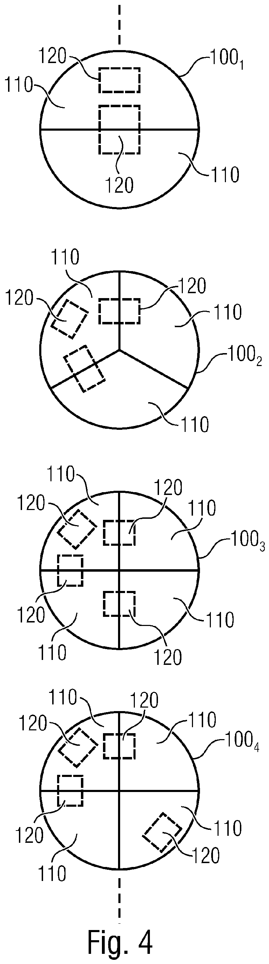

The sensor elements 100 shown in Fig. 1 and Fig. 2 are configured for unidirectional shear force sensing. Having two sensor cells, the sensor element 100 may be capable to sense shear forces along one axis 130, e.g., in only one direction. The axis 130 may be perpendicular to the cell boundary 112 between the two adjacent sensor cells $110_1$ and $110_2$, i.e. perpendicular to a surface of the cell boundary $112_4$ in an non-deformed state. The sensor elements 100 shown in Fig. 1 and Fig. 2 may be configured to sense lateral forces, e.g., shear forces at a sensor interface, i.e. at a top of the flexible cover 114. Additionally, the sensor element 100 is sensitive for vertical forces, i.e. forces perpendicular to the cover 114. This sensor elements 100, for example, can be fixed to a mechanical grip element to detect efficiently and with high accuracy whether an object is properly griped or whether the object slips, i.e. as a stick-slip sensor on mechanical grip elements. The two-cell sensor element 100 might be advantageous in situations where only one-directional shear force is relevant, i.e. gripping and lifting of objects, since shear force would only appear in lateral direction. The two-cell sensor would then be sufficient, but be much simpler and cheaper to manufacture, realize and operate than a sensor element with three or more sensor cells, as shown in Fig. 4 to 10.

Fig. 1 shows an embodiment, where the plurality of pressure sensor elements 120 represent absolute pressure sensors. The sensor element 100, for example, comprises only absolute pressure sensors and each sensor cell 110 comprises one of the absolute pressure sensors, i.e. each sealed inner volume 118 is fluidically coupled to one of the plurality of pressure sensor elements. As shown in Fig. 1 the first sealed inner volume $118_1$ of the first sensor cell $110_1$ is fluidically coupled to a first absolute pressure sensor element $120_1$ and the second sealed inner volume $118_2$ of the second sensor cell $110_2$ is fluidically coupled to a second absolute pressure sensor element $120_2$.

Generally speaking, the plurality of pressure sensor elements 120 may comprise a plurality of absolute pressure sensor elements and each sensor cell 110 of a sensor element 100 may comprise one of the absolute pressure sensor elements 120 fluidically coupled to the sealed inner volume 118 of the respective sensor cell 110.

The sensor element 100 may be configured to detect an external force applied to the sensor element 100, e.g., a force applied to the flexible cover 114, i.e. to the flexible cell cover 114, of the first sensor cell 110, and/or to the flexible cell cover $114_2$ of the second sensor cell $110_2$, by detecting for each sensor cell $110_1$ and $110_2$ an absolute pressure within the fluid in the sealed inner volume $118_1/118_2$ of the respective sensor cell $110_1/110_2$ by the respective pressure sensor element $120_1/120_2$. In other words, in both adjacent sensor cells $110_1$ and $110_2$, a respective absolute pressure sensor element $120_1/120_2$ may be coupled to the respective sealed inner volume $118_1/118_2$ in order to evaluate the pressure of both cells individually. The sensor element 100 is configured to obtain a momentary pressure information comprising a first absolute pressure value obtained from the first absolute pressure sensor element $120_1$ and a second absolute pressure value obtained from the second absolute pressure sensor element $120_2$. A pressure difference between the two adjacent sensor cells, see the first sensor cell $110_1$ and the second sensor cell $110_2$, is determinable, e.g. by the controller 210 in Fig. 3, based on the absolute pressure values obtained from the absolute pressure sensors of the two adjacent sensor cells. The absolute pressure values and the pressure difference may be an indication for a magnitude and direction of an external force applied to the sensor element 100.

According to an embodiment, the sensor element 100 may comprises a combination of at least one absolute pressure sensor and at least one differential pressure sensor. For example, the plurality of pressure sensor elements 120 comprises one or more absolute pressure sensors and one or more differential pressure sensors. Fig. 2, for example, shows an embodiment, with one absolute pressure sensor element $120_1$ and one differential pressure sensor element $120_2$. The first sealed inner volume $118_1$ of the first sensor cell $110_1$ is fluidically coupled to the absolute pressure sensor element $120_1$ and to the differential pressure sensor element $120_2$ and the second sealed inner volume $118_2$ of the second sensor cell $110_2$ is fluidically coupled to the differential pressure sensor $120_2$. The differential pressure sensor element $120_2$ is fluidically coupled to the sealed inner volume $118_1$ of the first sensor cell $110_1$ and to the sealed inner volume $118_2$ of the second sensor cell $110_2$. For example, each sealed inner volume, see $118_1$ and $118_2$, is fluidically coupled to the differential pressure sensor element $120_2$.

Generally speaking, a differential pressure sensor element $120_2$ may be fluidically coupled to the sealed inner volumes $118_1$ and $118_2$ of two adjacent sensor cells 110 of a sensor element 100 for evaluating a pressure difference. The differential pressure sensor element $120_2$ crosses the flexible cell boundary 112 between the adjacent sensor cells $110_1$ and $110_2$. Adjacent sensor cells $110_1$ and $110_2$ are sensor cells sharing a cell boundary 112 or being separated by a cell boundary 112. The differential pressure sensor element $120_2$ may be fluidically coupled to the two sealed inner volumes $118_1$ and $118_2$ being separated by the cell boundary 112.

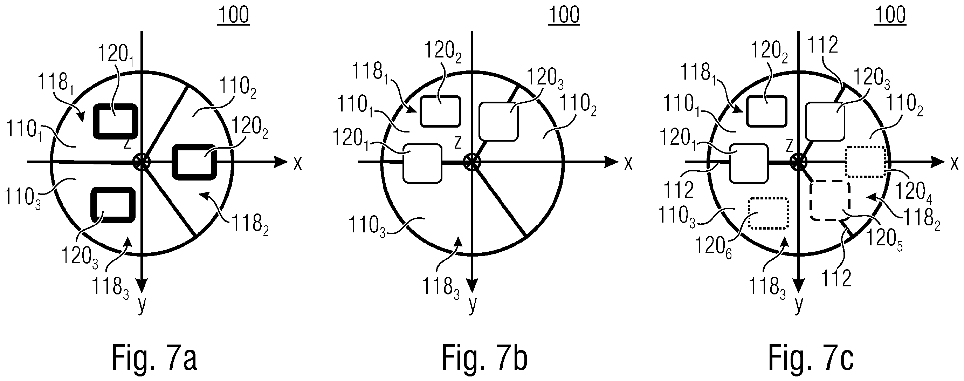

Generally speaking a herein described sensor element 100 may comprise two adjacent sensor cells, e.g., $110_1$ and $110_2$ in Fig. 2, 7b or 7c, wherein at least one of the two adjacent sensor cells $110_1$ and $110_2$ comprises an absolute pressure sensor, see $120_1$ in Fig. 2 and $120_2$ in Fig. 7b and 7c, of the at least one absolute pressure sensors. For example, referring to Fig. 2, a sealed inner volume, see $118_1$, of a first sensor cell, see $110_1$, of the two adjacent sensor cells is fluidically coupled to the absolute pressure sensor. Further, sealed inner volumes, see $118_1$ and $118_2$, of the two adjacent sensor cells $110_1$ and $110_2$ are fluidically coupled to the same differential pressure sensor $120_2$ of the at least one differential pressure sensors, i.e. to a common differential pressure sensor. The differential pressure sensor is fluidically coupled to the sealed inner volume $118_1$ of the first sensor cell 110 of the two adjacent sensor cells 110 and to the sealed inner volume $118_2$ of a second sensor cell 110 of the two adjacent sensor cells 110. A number of the sensor cells 110 may be two, e.g., the sensor element 100 comprises the two adjacent sensor cells $110_1$ and $110_2$, as shown in Fig. 2. Alternatively, the sensor element 100 may comprise additionally to the two adjacent sensor cells $110_1$ and $110_2$ further mechanically coupled sensor cells 100 fluidically coupled to at least one of the plurality of pressure sensor elements 120, as shown in Fig. 7b and 7c.

The sensor element 100 shown in Fig. 2 may be configured to detect an external force applied to the sensor element 100, e.g., a force applied to the flexible cover 114, i.e. to the flexible cell cover $114_1$ of the first sensor cell 110, and/or to the flexible cell cover $114_2$ of the second sensor cell $110_2$, by detecting an absolute pressure within the fluid sealed within the first sensor cell using the absolute pressure sensor element $120_1$ and by detecting a pressure difference between fluids sealed within the two adjacent sensor cells, i.e. between the first sensor cell $110_1$ and the second sensor cell $110_2$, using the differential pressure sensor element $120_2$. An absolute pressure within the second sensor cell $110_2$ is determinable, e.g. by the controller 210 in Fig. 3, based on the absolute pressure value obtained from the absolute pressure sensor $120_1$ and based on the pressures difference obtained from the differential pressure sensor $120_2$. A combination of the absolute pressure value and the pressure difference may be an indication for a magnitude and/or a direction of an external force applied to the sensor element 100.

Optionally, the second sensor cell $110_2$ may also comprise an absolute pressure sensor. This results in redundancy, i.e. the sensor element 100 comprises redundant pressure sensor elements. Such an embodiment may be especially advantageous in sensible environments, since a high accuracy and/or high robustness is achieved.

The embodiments of the sensor element 100 shown in Fig. 1 and Fig. 2 have the advantage that same enable a determination of a direction and a magnitude of a force applied to the respective sensor element 100.

With the sensor elements 100 shown in Fig. 1 and Fig. 2 it is possible to detect vertical and horizontal forces.

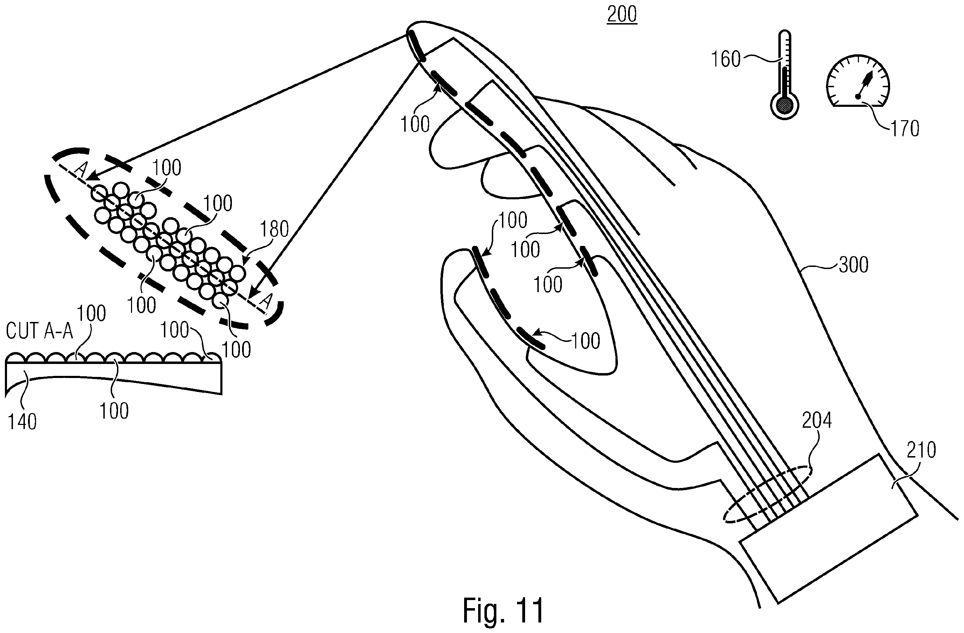

A contact force sensor device 200, e.g., as shown in Fig. 3 or Fig. 11, may comprise one or more of the herein described sensor elements 100 in order to determine or evaluate a contact force 202 applied to the one or more sensor elements 100, i.e., to measure vertical and/or shear force at a contact point. The read out of the at least two pressure sensor elements 120 of the sensor element 100 or of the pressure sensor elements 120 of two or more sensor elements 100 and the determination of the contact force 202, e.g., a direction and a strength of the contract force 202, like a vector, may be performed by a controller 210 comprised by the contact force sensor device 200.

Fig. 3 shows schematically a contact force sensor device 200 comprising exemplarily the sensor element 100 of Fig. 1 and a controller 210. However, the contact force sensor device 200 may alternatively comprise any other herein described sensor element 100 or combination of sensor elements 100.

The controller 210 is configured to read out the plurality of pressure sensor elements, i.e. the first pressure sensor element $120_1$ and the second pressure sensor element $120_2$, of the sensor element 100 to obtain a momentary pressure information 204. The momentary pressure information 204 comprises one or more pressure values read from the plurality of pressure sensor elements 120. In case of the embodiment shown in Fig. 3, for example, the controller 210 is configured to obtain a first pressure value $122_1$ associated with the first sensor cell $110_1$, e.g., by reading out the first pressure sensor element $120_1$, and/or a second pressure value $122_2$ associated with the second sensor cell $110_2$, e.g., by reading out the second pressure sensor element $120_2$.

In case of the sensor element 100 being the one shown in Fig. 2, the momentary pressure information 204 comprises, e.g., represents, two pressure value, i.e. an absolute pressure read from the absolute pressure sensor $120_1$ and a pressure difference read from the differential pressure sensor $120_2$.

Generally speaking, the momentary pressure information 204 may comprise for each of the at least two pressure sensor elements 120 of a herein described sensor element 100 a pressure value. The momentary pressure information 204 may comprise a vector of two or more pressure values, each of which is associated with one of the two or more pressure sensor elements 120. If no pressure, e.g. no absolute pressure or no pressure difference, is detected by a pressure sensor element 120 of the plurality, e.g., two or more, of pressure sensor elements 120, the respective read out pressure value 122 may be zero. It may also be possible, that the momentary pressure information 204 comprises only pressure values unequal to zero together with an indication of the pressure sensor element 120 from which the respective pressure value is read out.

The sensor element 100 may comprise within its base wall 116, e.g. a wall opposite to the cover 114 of the sensor element 100, an electronic circuit and/or an interface for providing one or more pressure values detected by the at least one pressure sensor element 120. The at least one pressure sensor element 120 is arranged on, e.g., fixed to, an inner surface of the base wall 116, i.e. a surface facing the sealed inner volume, see $118_1$ and $118_2$. Optionally, the controller 210 is embedded or integrated within the base wall 116 and connected to each pressure sensor element 120 of the sensor element 100 via the electronic circuit.

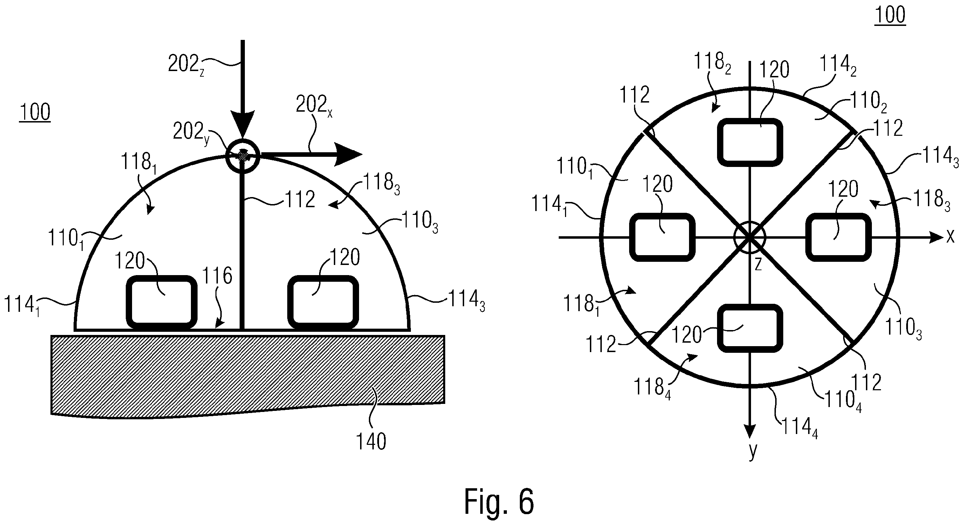

According to an embodiment, the sensor element 100 comprises a mounting base. The sensor cells 110, for example, are arranged, e.g., fixed, in or on the mounting base 140, e.g., see Fig. 6, Fig. 8, Fig. 9 and Fig. 11. The mounting base 140, for example, comprises the electronic circuit and/or the interface. Optionally the controller 210 is embedded or integrated within the mounting base 140 and, for example, connected to each pressure sensor element 120 of the sensor element 100 via the electronic circuit.

In case of an interface, e.g., a communication link, being comprised by the base wall or the mounting base 140, the interface may be configured to transmit the momentary pressure information 204 on a transmission medium such as a wireless transmission medium or a wired transmission medium to the controller 210. The transmission medium, for example, is a wired or wireless connection based on, e.g., I2C, SPI, Bluetooth, BLE, etc.

According to an embodiment the controller 210 can be located local to, e.g., in the vicinity of, the one or more sensor elements 100. Additionally, or alternatively, it may be possible that the controller 210 comprises two or more processing units at distributed hierarchy levels, e.g. a combination of one or more local processing units, e.g., per sensor element 100 or for a set of locally grouped/clustered sensor elements 100 (e.g., at a finger tip area), and an upper layer processing unit configured to obtain signals from the one or more local processing units. The controller 210 may comprise two or more upper layer processing units, each one configured to obtain signals from a different set of one or more local processing units, and an overall processing unit configured to obtain signals from the two or more upper layer processing units. An upper layer processing unit may be configured to obtain one or more signals from the associated local processing units to combine / process and/or distribute the one or more signals to the overall processing unit.

The controller 210 is configured to determine information 212 regarding a direction and/or a strength, e.g., a vector, of the contact force 202 applied to the sensor element 100 based on the momentary pressure information 204. For example, a vertical component $202_z$ of the contact force 202 may be determined based on a sum of the absolute pressure value, see $122_1$, read out from the absolute pressure sensor element comprised by the first sensor cell $110_1$, see $120_1$, and the absolute

pressure value, see $122_2$, read out from the absolute pressure sensor element comprised by the second sensor cell $110_2$, see $120_2$. A horizontal component $202_x$ of the contact force 202 may be determined based on a difference between the absolute pressure value, see $122_1$, read out from the absolute pressure sensor element comprised by the first sensor cell $110_1$, see $120_1$, and the absolute pressure value, see $122_2$, read out from the absolute pressure sensor element comprised by the second sensor cell $110_2$, see $120_2$. The determined information 212 may comprise the vertical component $202_z$ and the horizontal component $202_x$, e.g., as a vector.

In case of the sensor element 100 being the one shown in Fig. 2, the controller 210 may be configured to determine the horizontal component $202_x$ of the contact force 220 based on the pressure difference $p_{diff}$ read from the differential pressure sensor, see $120_2$. The vertical component $F_z$ $202_z$ can be determined based on the absolute pressure value $p_{abs}$ read from the absolute pressure sensor, see $120_1$, and the pressure difference $p_{diff}$ read from the differential pressure sensor, see $120_2$, e.g. $F_z \sim (2 \cdot p_{abs} + p_{diff})$. Thus, the determined information 212 may comprise the vertical component $202_z$ and the horizontal component $202_x$, e.g., as a vector.

Generally speaking, the controller 210 may be configured to combine pressure values comprised by the momentary pressure information 204 to determine the vertical component $202_z$ and/or the horizontal component $202_x$ of the contact force 202, i.e. combine momentary pressure values read out of two or more pressure sensor elements 120 to determine the direction and/or strength of the contact force 202.

As shown in Fig. 3, the outer cover $114_1$ of the first sensor sensor cell $110_1$ and the outer cover $114_2$ of the second sensor cell $110_2$ of the sensor element 100 are flexible, i.e. deformable by an external force, e.g. the contract force 202. A deformation of a sensor cell 110, see $110_1$ and $110_2$, may result in a change of a pressure within the respective sensor cell 110, e.g. compared to a reference pressure associated with a non-deformed sensor cell 110, i.e. a pressure within the sealed inner volume 118, see $118_1$ and $118_2$, of the respective sensor cell 110 when same is not deformed. Due to the sensor cells 110 of the sensor element 100 being mechanically coupled, a deformation of a sensor cell, see $110_2$, onto which the contact force 202 is applied may also result in a deformation of sensor cells, see $110_1$, neighboring the sensor cell $110_2$ onto which the contact force 202 is applied. In other words, the sensor cell $110_2$ onto which the contact force 202 is applied and the neighboring mechanically coupled sensor cell, see $110_1$, are deformed by the contact force 202. The mechanical coupling of the sensor cells 110 allows a two-dimensional evaluation of the contact force 202 by a sensor element 100 with a one-dimensional arrangement of its sensor cells 110, e.g., compare Fig. 1 and 2, and a three-dimensional evaluation of the contact force 202 by a sensor element 100 with a two-dimensional arrangement of its sensor cells 110, e.g., compare Fig. 4-10.

Fig. 1 to 3 show exemplarily a sensor element 100 with two sensor cells $110_1$ and $110_2$. Alternatively, same could be implemented with three or more sensor cells, e.g., as shown in Fig. 4 to 10. It is possible that a sensor element 100 comprises n sensor cells 110, wherein n is an integer equal to or greater than 2, 3, 5 or 10.

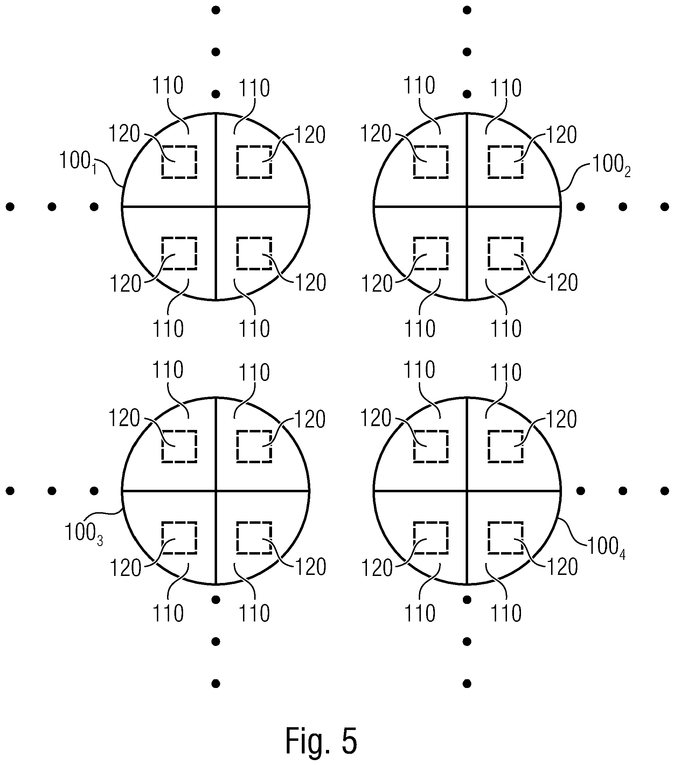

Fig. 3 shows exemplarily a contact force sensor device 200 with one sensor element 100. Alternatively, it is also possible, that the contact force sensor device 200 comprises two or more sensor elements 100, e.g. arranged in a one-dimensional array, see Fig. 4, or arranged in a two-dimensional array, see Fig. 5.

Fig. 4 shows an embodiment of a one-dimensional array of sensor elements, see $100_1$ to $100_4$, i.e. the sensor elements 100 are arranged in form of a one-dimensional array. Fig. 4 shows exemplarily, a one-dimensional array of different sensor elements 100. Alternatively, a one-dimensional array of identical sensor elements 100, i.e. of sensor elements of the same type, is also possible. As can be seen in Fig. 4, the sensor elements 100 of the one-dimensional array can differ among each other in a number of sensor cells comprised by each sensor element and/or in a number and/or arrangement of pressure sensor elements 120 of each sensor element 100.

Fig. 5 shows an embodiment of a two-dimensional array of sensor elements, see 100, to $100_4$, i.e. the sensor elements 100 are arranged in form of a two-dimensional array. Fig. 5 shows exemplarily a two-dimensional array of identical sensor elements 100, i.e. of sensor elements 100 of the same type. Alternatively, the two-dimensional array can comprise sensor elements differing among each other, e.g., in a number of sensor cells and/or in a number and/or arrangement of pressure sensor elements 120. Exemplarily, the sensor elements 100 comprise four sensor cells 110, alternatively, it is possible that another number of sensor cells 110 can be comprised by the sensor elements 100. The two-dimensional arrangement can comprise nxn sensor elements 100 or nxm sensor elements 100, wherein n is an integer equal to or greater than 2, 3, 5 or 10 and wherein m is an integer equal to or greater than 2, 3, 5 or 10. In case of nxm sensor elements 100 the integer n is unequal to the integer m.

It might be advantageous, if a one-dimensional array of sensor elements 100, see Fig. 4, or a two-dimensional array of sensor elements 100, see Fig. 5, comprises two or more sensor elements 100 of a first type of sensor elements and two or more sensor elements of a second type of sensor elements. The first type of sensor elements 100 may differ from the second type of sensor elements 100 in a number of sensor cells and/or in a number and/or arrangement of pressure sensor elements 120. A type of a sensor element 100 may define a number of sensor cells 110 of the sensor element 100 and/or a number and/or arrangement of pressure sensor elements 120 of the sensor element 100.

Fig. 4 shows exemplarily sensor elements 100 with different pressure sensor element numbers and arrangements. On the contrary, Fig. 5 shows exemplarily sensor elements 100 with the same number and arrangement of pressure sensor elements 120. Different configurations are possible for each sensor element 100 of the one-dimensional or two-dimensional arrangement of sensor elements, like only absolute pressure sensors or a combination of absolute pressure sensors and differential pressure sensors.

The arrangement of a plurality of sensor elements 100, e.g., as shown in Fig. 4 and 5, in a one-dimensional or two-dimensional arrangement enables a monitoring of a large area. With such arrangements it may be possible to detect and evaluate with a herein discussed contact force sensor device 200 a plurality of forces applied to the array of sensor elements 100. The two-dimensional arrangement of Fig. 5 may be designed/formed as a mat of a plurality of sensor elements 100. The controller 210 of Fig. 3 may be configured to, based on pressure values received from a plurality of pressure sensor elements 120 of the mat of plurality of sensor elements 100, determine a two-dimensional force field, e.g., a vector field, showing at least one force applied to the mat, i.e. to the sensor element 100 arranged on the mat. The two-dimensional force field may indicate a location and a magnitude and/or a direction of at least one force within a two-dimensional area, i.e. within the two-dimensional area spanned by the sensor elements 100.

The one-dimensional or two-dimensional arrangement of sensor elements 100 may be configured to detect and evaluate a plurality of forces applied to one or more of the sensor elements 100 of the one-dimensional or two-dimensional arrangement. It might be advantageous, if the one-dimensional arrangement of sensor elements 100 comprises at least 5, 10, 20 or 30 sensor elements 110 in a row, as described with regard to Fig. 4, or if the two-dimensional arrangement of sensor elements 100 comprises nxn or nxm sensor elements 100 with n being an integer equal to or greater than 5, 10, 20 or 30 and with m being an integer equal to or greater than 5, 10, 20 or 30, as described with regard to Fig. 5. In this case, for example, pressure values associated with different parts of the arrangement may be considered by the controller 210 of Fig. 3 to determine a magnitude and/or direction of forces applied to the different parts. For example, the controller 210 may be configured to identify within an area of the one-dimensional or two-dimensional arrangement of sensor elements 100 a sensor element 110 providing the highest pressure value, e.g., highest absolute pressure or highest pressure difference, and base the determination of the magnitude and/or direction of the force on pressure values associated with sensor elements 100 surrounding the identified sensor element 100, i.e. the sensor elements 100 associated with the highest pressure value, e.g., pressure values associated with the next and the next-but-one sensor element with respect to the identified sensor element may be taken into account. Pressure values associated with sensor elements 100 located within a further area of the one-dimensional or two-dimensional arrangement of sensor elements 100 may be considered similarly to determine a further force applied in the further area.

The controller 210 of the contact force sensor device 200 shown in Fig. 3 may analyze a contact force 202 applied to one or more of the sensor elements 100 shown in Fig. 4 or 5 by evaluating pressure values of each sensor element 100 individually, as described with regard to Fig. 3, or by combining pressure values of two or more sensor elements 100. The plurality of sensor elements 100 may be connected to the controller 210.

The plurality of sensor elements 100 may be configured to cover a mat or an area of a device, like a finger area of a robot in a one-dimensional or two-dimensional arrangement. For example, the plurality of sensor elements 100 may be arranged on, e.g., fixed to, a common mounting base. The controller 210 may be configured to read out pressure values of each of the plurality of sensor elements 100, for example, each sensor element 100 may be configured to provide a momentary pressure information comprising one or more pressure values associated with the one or more pressure sensor elements 120 of the respective sensor element 100. Further, the controller 210 may be configured to determine a direction and/or a strength and/or a position of a force contact point on the one-dimensional or two-dimensional arrangement of sensor elements of one or more contact forces applied to the plurality of sensor elements 100 based on the momentary pressure information.

Optionally, the contact force sensor device 200 comprises a flexible cover layer arranged on the plurality of sensor elements 100, e.g., on top of the array, i.e. on the one-dimensional arrangement or the two-dimensional arrangement of sensor elements 100, e.g., covering the plurality of sensor elements 100. The flexible cover layer may be configured to mechanically couple the plurality of sensor elements 100. A force applied to the flexible cover layer may be distributed over several sensor elements 100 of the plurality of sensor elements 100. This increases a resolution for location, but reduces measuring the contact area (locality) over the array. This might be useful for specific use-cases, e.g. touch panels. Similarly the flexible cell covers 114 of the sensor cells 110 of a sensor element 100 may be configured to distributed an applied force over several sensor cells 110 of the respective sensor element 100. This increases an accuracy and/or robustness at a force determination using the respective sensor element 100.

Figures 1 to 5 already show that a herein described sensor element 100 can be realized with different numbers of sensor cells 110 and with different arrangements of the two or more pressure sensors 120. With regard to the following Figures 6 to 7c implementation options with regard to the numbers of sensor cells 110 and with regard to possible different arrangements of the two or more pressure sensors 120 are described in more detail. The features and/or functionalities described with regard to the sensor elements 100 in Fig. 1 to 5 are also applicable to the sensor elements 100 in Fig. 6 to 7c and also the other way around. This applies especially with regard to the at least two pressure sensor elements 120 within the sensor element 100, with regard to the base 116, i.e. a bottom sensor wall, with regard to a mounting base 140 and with regard to an implementation of the respective sensor element 100 within the contact force sensor device 200 in Fig. 3, i.e. with regard to a read out of the pressure values and a determination of the contact force 202.

Fig. 6 shows exemplarily the sensor element 100 in form of a spherical segment or a hemisphere once in a side view on the left and once in a top view on the right. The sensor element 100 comprises exemplarily four mechanically coupled sensor cells $110_{1-4}$, e.g., just like the sensor elements 100 shown in Fig. 5 or as the sensor elements $100_3$ and $100_4$ in Fig. 4. Alternatively, another number of sensor cells 110 could be implemented. For example, the spherical segment (hemisphere) could be subdivide into two halves, i.e. a sensor element 100 with two sensor cells 110 like the one shown in Fig. 1 and Fig. 3. Embodiments of the sensor element 100 in form of a spherical segment or hemisphere with three sensor cells can be seen in Fig. 7a to Fig. 7c and in Fig. 4 (see $100_2$ in Fig. 4). Generally speaking, the sensor element 100 in form of a spherical segment or a hemisphere may comprise n sensor cells 110, wherein n is an integer equal to or greater than 2. An upper limit for the number of sensor cells 110 may depend on an area of a circle spanned by the spherical segment or the hemisphere, i.e. on a size of a base area 116 of the sensor element 100. The upper limit of sensor cells 110 may be 3, 4 or 6.

Each sensor cell 110, see $110_{1-4}$, has a sealed inner volume 118, see $118_{1-4}$, within an at least partially flexible cell housing. The sensor cells 110, for example, are filled with either gas or liquid, easily done in a way to show the same initial pressure for unloaded conditions. The flexible cell housing, i.e. a sensor cell housing, comprises a flexible outer cover 114, see $114_{1-4}$, and flexible cell boundaries 112 between adjacent sensor cells 110. A sensor cell 110 within a spherical segment or a hemisphere, for example, has one flexible outer cover 114 and two flexible cell boundaries 112 between the respective sensor cell 110 and two adjacent sensor cells 110. This is, for example, the case for sensor elements 100 with three or more sensor cells 110. The flexible cell boundaries 112 subdivide the spherical segment (hemisphere) into the sensor cells 110. The flexible outer covers $114_{1-4}$ of all sensor cell housings form together an overall outer cover in form of a spherical segment or a hemisphere of the sensor element 100. In other words, a sensor cell, i.e. the sensor element 100, is divided into a set of sub-cells, i.e. sensor cells 110, each encapsulated by a flexible cell housing, i.e., flexible cell walls, and all sub-cells are mechanically coupled as a single sensor structure. Fig. 6 shows such a multi-cell sensor unit, i.e. the sensor element 100. The typical cross section is shown on the left in Fig. 6, exemplarily for a 4-cell structure, which is, e.g., mounted on a given base surface, i.e. a mounting base 140.

The sensor element 100 may comprise a mounting base 140 onto which the sensor cells 110 are arranged, e.g., mounted or fixed. As already described above, the mounting base 140 may comprise an electronic circuit and/or an interface connected to the plurality of pressure sensor elements 120. The mounting base 140, e.g., is a flexible mounting base, e.g., comprising flex-pcb-material, silicon-material or rubber-material, or a rigid mounting base, e.g., comprising rigid-pcb-material.

As shown in Fig. 6, the sensor element 100 comprises a plurality of pressure sensor elements 120, which are exemplarily absolute pressure sensors, e.g., as described with regard to the sensor element 100 in Fig. 1, 3 and 5. Each sensor cell 110 comprises one of the absolute pressure sensors, i.e. each sensor cell is fluidically coupled to one of the absolute pressure sensors. Additionally, the plurality of pressure sensor elements 120 might comprise one or more differential pressure sensors. This results in redundant pressure sensor elements improving an accuracy and robustness of the sensor element 100. A differential pressure sensor can be coupled between two adjacent sensor cells, e.g. crossing a cell boundary 112 and being fluidly coupled to the inner volume 118 of the respective two adjacent sensor cells 110, i.e. couple to the inner volume 118 of a first sensor cell 110 of the respective two adjacent sensor cells 110 and couple to the inner volume 118 of a second sensor cell 110 of the respective two adjacent sensor cells 110. Alternatively, it might also be possible that the plurality of pressure sensor elements 120 comprise at least one absolute pressure sensor and at least one differential pressure sensor, e.g., see Fig. 2, Fig. 4, Fig. 7b and Fig. 7c. For example, one absolute pressure sensor and three differential pressure sensors, see $100_3$ in Fig. 4, may be sufficient for a fourcell sensor element 100. For example, one of the sensor cells 110 may comprise an absolute pressure sensor and three of the four cell boundaries 112 may be crossed by a respective differential pressure sensor. Each sensor cell 110, for example, may be equipped with a pressure sensor, e.g., an absolute pressure sensor and/or a differential pressure between two mechanically coupled sensor cells 110.

Absolute pressure sensors are not shared among sensor cells 110, i.e. only one sensor cell 110 is fluidically coupled to one absolute pressure sensor. The number of absolute pressure sensors 120 may corresponds to the number of sensor cells 110 of the sensor element 100, as shown in Fig. 1, Fig. 5 and Fig. 6. The controller 210 of one of the herein described contact force sensor devices 200 may analyze a contact force 202 applied to such a sensor element 100 by calculating a sum of all obtained pressure values to determine a magnitude of a contact force and by calculating pressure differences using pressure values obtained from adjacent sensor cells 110 to determine a direction of the contact force. In other words, the controller 210 may be configured to combine two or more absolute pressure values obtained from the plurality of differential pressure sensors 120 to determine a direction and/or a magnitude of the contact force. For example, a vertical component of a force applied to the sensor element 100 is determinable based on a sum of absolute pressure values and/or a direction of the force applied to the sensor element 100 is determinable based on differences between absolute pressure values of neighboring sensor cells 110. The two-cell arrangement in Fig. 2 allows only a uni-directional force determination. On the contrary a sensor element 100 with three or more sensor cells 110 allows a three-dimensional force direction determination.

Fig. 6 shows a vertical tactile force $F_z$ $202_z$ acting on an upper part of the flexible sensor structure, i.e. an upper part of the sensor housing of the sensor element 100. The cell boundaries 112 and the cover 114 may be made out of flexible material. As a result, the pressure inside the sensor cell 110 will increase, and the vertical force $202_z$ can be calculated/derived, e.g., by the controller 210 shown in Fig. 3, with

$$F_z = f_z(p_1 + p_2 + p_3 + p_4, T, p_0)$$

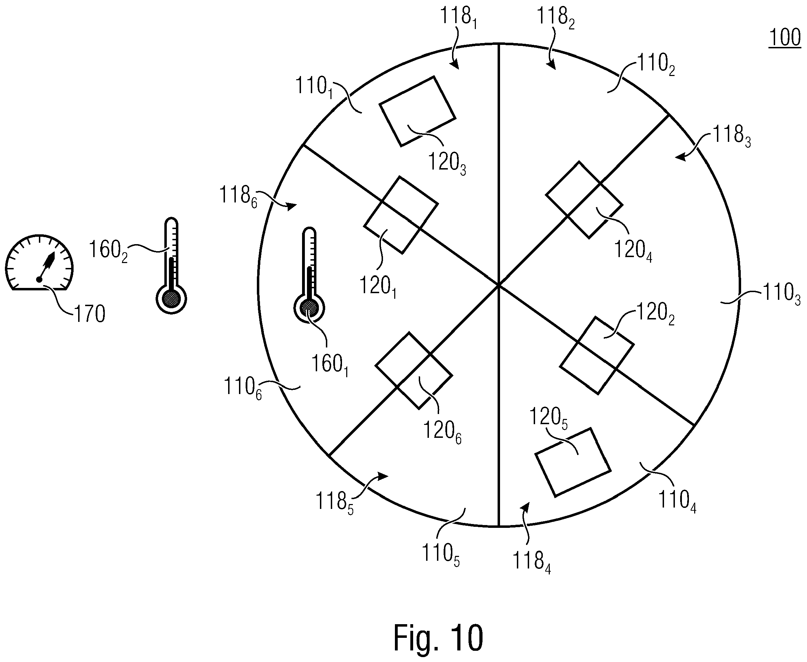

The potentially non-linear function $f_z$ is used to calculate the force 202 from the sensor readings, the cell temperature T, e.g., also available from each pressure sensor, and the outside atmospheric pressure $p_0$, which can be easily measured by an optional reference sensor outside the sensor structure, e.g., compare also Fig. 10 for the determination of the cell temperature and the outside atmospheric pressure $p_0$. The sensor readings may represent the momentary pressure information 204 comprising a first pressure value $p_1$ associated with the pressure sensor element $120_1$, a second pressure value $p_2$ associated with the pressure sensor element $120_2$, a third pressure value $p_3$ associated with the pressure sensor element $120_3$, and a fourth pressure value $p_4$ associated with the pressure sensor element $120_4$.

Having a vertical force, see $202_x$ and $202_y$, acting on that structure, also shear forces can be introduced by the application leading to a deformation of the structures and a pressure difference in the individual sub-cells. The controller 210 shown in Fig. 3 may be configured to calculate/derive the shear forces, e.g., for a 4-cell structure as shown in Fig. 6, as follows:

$$F_x = f_x(p_1 - p_3, T) \dots \text{shear force in x-direction}$$

$$F_y = f_y(p_2 - p_4, T) \dots \text{shear force in y-direction}$$

The functions $f_x$ and $f_y$ may also be potentially non-linear functions, e.g., describing a potentially non-linear relationships between pressure and temperature readings from the applied forces $F_x$, $F_y$.

The sensor element 100 is capable to measure or evaluate

- Static and dynamic forces (contact point remains constant / unchanged with touching object), in vertical and shear directions
- Friction regimes - stick-range, stick-slip range, slip-range
- Grip for any handling purposes from vertical force in combination with shear components (object handling/carrying)

Fig. 6 shows exemplarily a four sensor cell 110 geometry. An alternative sub-cell geometries are also possible, e.g. a 3-cell geometry as depicted in Fig. 7a to 7c.

Fig. 7a to Fig. 7c show different arrangements of the plurality of pressure sensor elements 120, see $120_1$ to $120_6$, for a sensor element 100 with three sensor cells 110, see $110_1$ to $110_3$. The arrangements of the plurality of pressure sensor elements 120 shown in Fig. 7a to Fig. 7c can be adapted for any other number n of sensor cells, wherein n is an integer equal to or greater than 2, e.g., for the sensor element 100 of Fig. 6 with four sensor cells 110.

Fig. 7a shows an embodiment of a sensor element 100 with absolute pressure sensors $120_1$ to $120_3$ as the plurality of pressure sensor elements. For each of the sensor cells $110_1$ to $110_3$ the respective sealed inner volume, $118_1$ to $118_3$, is fluidically coupled to one of the absolute pressure sensors $120_1$ to $120_3$. Each sensor cell $110_1$ to $110_3$ comprises a different one of the plurality of pressure sensor elements. The plurality of pressure sensor elements comprises one absolute pressure sensor 120 per sensor cell 110. The arrangement shown in Fig. 7a can also be adapted for n sensor cells 110, wherein n is an integer equal to or greater than two. Each sensor cell 110 comprises one of n absolute pressure sensors, i.e. there is one absolute pressure sensor for each sensor cell 110.

Fig. 7b shows an embodiment of a sensor element 100 with one absolute pressure sensor $120_2$ and two differential pressure sensors $120_1$ and $120_3$ as the plurality of pressure sensor elements. One sensor cell, e.g., a first sensor cell $110_1$, comprises the absolute pressure sensor, i.e. the sealed inner volume $118_1$ of the first sensor cell 110, is fluidically coupled to the absolute pressure sensor $120_2$. Further the sealed inner volume $118_1$ of the first sensor cell $110_1$ is fluidically coupled to the two differential pressure sensors $120_1$ and $120_3$, i.e. to a first differential pressure sensor $120_1$ and to a second differential pressure sensor $120_3$. The first differential pressure sensor $120_1$ is further coupled to the sealed inner volume $118_3$ of a third sensor cell $110_3$, i.e. a first adjacent sensor cell, and the second differential pressure sensor $120_3$ is further coupled to the sealed inner volume $118_2$ of a second sensor cell $110_2$, i.e. a second adjacent sensor cell. The first sensor cell $110_1$ is arranged adjacent to the second sensor cell $110_2$ and to the third sensor cell $110_3$ and the second sensor cell $110_2$ is arranged adjacent to the third sensor cell $110_3$. The first sensor cell $110_1$ and the second sensor cell $110_2$ represent two adjacent sensor cells, The first sensor cell $110_1$ and the third sensor cell $110_3$ represent two adjacent sensor cells and the second sensor cell $110_2$ and the third sensor cell $110_3$ represent two adjacent sensor cells.

The arrangement shown in Fig. 7b can be adapted for any other number of sensor cells 110, e.g., for n sensor cells, wherein n is an integer equal to or greater than two. For such an embodiment the plurality of pressure sensor elements comprise one absolute pressure sensor and n-1 differential pressure sensors. One of the n sensor cells 110 comprises the absolute pressure sensor and the n-1 differential pressure sensors are arranged at cell borders, each differential pressure sensor coupling to two adjacent sealed inner volumes separated from each other by the cell border at which the respective pressure sensor is arranged. Only one cell border is not crossed by a differential pressure sensor.

The plurality of pressure sensor elements 120 may be arranged, so that no redundant pressure sensor elements 120 are present within the sensor element 100, but so that vertical forces as well as horizontal forces are determinable. This is, for example, the case for the embodiments described with regard to Fig. 7a and Fig. 7b. This can also be realized with a different arrangement. For example, considering the sensor element 100 shown in Fig. 7b, the first differential pressure sensor $120_1$ can be replace by an absolute pressure sensor comprised by the third sensor cell $110_3$ or the second differential pressure sensor $120_3$ can be replace by an absolute pressure sensor comprised by the second sensor cell $110_2$ or both differential pressure sensors $120_1$ and $120_3$ can be replace by an absolute pressure sensor comprised by the second sensor cell $110_2$ or the third sensor cell $110_3$ and by a differential pressure sensor coupled to the sealed inner volume $118_2$ of the second sensor cell $110_2$ and to the sealed inner volume $118_3$ the third sensor cell $110_3$. Alternatively, different embodiments for sensor elements 100 with another number of sensor cells than three are also possible. For example, no differential pressure sensor needs to be arranged between two adjacent sensor cells, which both comprise an absolute pressure sensor. A differential pressure sensor may only be coupled between sealed inner volumes of two predefined adjacent sensor cells, wherein no more than one of the two predefined adjacent sensor cells may comprise an absolute pressure sensor, see also $100_4$ in Fig. 4. If the plurality of pressure sensor elements 120, for example, comprises at least one differential pressure sensor, the plurality of pressure sensor elements 120 has to further comprise at least one absolute pressure sensor for being able to determine vertical forces as well as horizontal forces with the respective sensor element 100. Avoiding redundancy simplifies a production of the respective sensor element 100 and reduces costs.

Alternatively, it is also possible that a sensor element 100 comprises redundant pressure sensor elements. Fig. 7c, for example, indicates that in addition to the pressure sensor elements 120 shown in Fig. 7b optionally a further differential pressure sensor $120_5$, a first further absolute pressure sensor $120_4$ and/or a second further absolute pressure sensor $120_6$ may be integrated within the sensor element 100. In other words, each sensor cell wall separating two adjacent sensor cells 110, see the sensor walls 112, may be crossed by a differential pressure sensor, see $120_1$, $120_3$ and $120_5$, and additionally, each sensor cell, see $110_1$ to $110_3$, comprises an absolute pressure sensor, see $120_2$, $120_4$ and $120_6$. The implementation of redundant pressure sensors improves an accuracy, a robustness and an efficiency at a determination of a contact force by a herein described contact force sensor device 200.

Alternatively, it is also possible that only one sensor cell, see $110_1$, comprises an absolute pressure sensor, see $120_2$, and that each sensor cell wall 112 separating two adjacent sensor cells 110 may be crossed by a differential pressure sensor, see $120_1$, $120_3$ and $120_5$. In other words, the sensor element 100 may comprise a sensor cell 110 comprising an absolute pressure sensor and being fluidically coupled to one or more differential pressure sensors and the sensor element 100 may comprise one or more further sensor cells 110 being fluidically coupled to one or more differential pressure sensors. One absolute pressure sensor may be sufficient to determine a magnitude and a direction of a force applied to the sensor element 100, if all sensor cells 110 are fluidically coupled to at least one differential pressure sensor, i.e. if at each cell border 112 or at all but one cell border 112 between adjacent sensor cells a differential pressure sensor is arranged.

Alternatively, it is also possible that the sensor element 100 comprises more than one absolute pressure sensor in order to increase an accuracy at a determination of the magnitude and/or direction of a force applied to the sensor element 100. For example, every second, third or fourth sensor cell 110 may comprise one of the absolute pressure sensors. At the sensor element $100_4$ in Fig. 4, for example, every second sensor cell 110 comprises an absolute pressure sensor element and at the sensor element 100 in Fig. 10 every third sensor cell 110 comprises an absolute pressure sensor element. It is not necessary, that a differential pressure sensor is arranged at each cell border between two adjacent sensor cells. The plurality of pressure sensor elements 120 of the sensor element 100 may comprise two or more differential pressure sensors coupled between two or more different pairs of adjacent sensor cells 110 of the sensor element 100 with three or more sensor cells 110.

The sensor element 100 comprising at least one absolute pressure sensor and at least one differential pressure sensor is not restricted to the arrangements described above. Other arrangements of one or more absolute pressure sensors and one or more differential pressure sensors are possible. In any case each sealed inner volume 118 should be fluidically coupled to at least one pressure sensor, e.g., an absolute pressure sensor or a differential pressure sensor.

The 3-cell and 4+-cell sensors, i.e. sensor elements 100 with three or more sensor cells 110, enable 2D shear force sensing, e.g. full surface vector sensing, i.e. vertical forces and 2D shear forces. Figures 1 to 7c showed that the sensor cells 110 of the herein discussed sensor element could be arranged in one-dimension, see Fig. 1 to 4, or in two-dimensions, see Fig. 4 to 7c. However, it is also possible that the sensor cells 110 are arranged in three-dimensions, e.g., as shown in the 2-layer approach in Fig. 8. In other words it is possible that two or more sensor cells 110 are stacked above each other.

Fig. 8 shows an embodiment of a sensor element 100 with a basis sensor cell $110_b$ on which a plurality of mechanically coupled sensor cells 110, are arranged. In other words, the plurality of mechanically coupled sensor cells $110_u$ are adjacently arranged on the basis sensor cell $110_b$. The plurality of mechanically coupled sensor cells 110, on the basis sensor cell $110_b$ may be arranged as described with respect to one of Figures 1 to 7c, i.e. the plurality of mechanically coupled sensor cells 110, may form a spherical segment or a hemisphere on the basis sensor cell $110_b$. The basis sensor cell $110_b$ may have the form of a cylinder, wherein a top wall $112_{bu}$ of the basis sensor cell $110_b$ represents a cell boundary between the basis sensor cell $110_b$ and the plurality of mechanically coupled sensor cells $110_u$, i.e. the top wall $112_{bu}$ of the basis sensor cell $110_b$ may represent a bottom wall or base wall, see 116 in Fig. 1-3 and Fig. 6, of the plurality of mechanically coupled sensor cells $110_u$. In other words, a flexible spherical segment (hemisphere) subdivided into a plurality of mechanically coupled sensor cells $110_u$ is positioned on a cylindrical basis sensor cell $110_b$.

The top wall $112_{bu}$ of the basis sensor cell $110_b$, i.e. a cell boundary between the basis sensor cell $110_b$ and the plurality of mechanically coupled sensor cells $110_u$, may be flexible or rigid. The side wall $112_b$, i.e. an outer surface, of the basis sensor cell $110_b$, i.e. a wall being perpendicular to the top wall, may be flexible, foldable or rigid. According to an embodiment, the top wall $112_{bu}$ and the side wall $112_b$ of the basis sensor cell $110_b$ may be flexible. At least one of both, i.e. of the top wall $112_b$, and the side wall $112_b$, should be flexible.

The basis sensor cell $110_b$ may be fluidically coupled to an absolute pressure sensor 124. The mechanically coupled sensor cells $110_u$ may be fluidically coupled to pressure sensor elements 120 as described with regard to Fig. 1 to 7c. Alternatively, it is possible that the at least one pressure sensor element 120 of the mechanically coupled sensor cells 110, comprises only one differential pressure sensor, i.e. only two mechanically coupled sensor cells $110_u$ are arranged on the basis sensor cell $110_b$ and both are fluidically coupled to a common differential pressure sensor element 120.

As shown in Fig. 8, for example, only the basis sensor cell $110_b$ may comprise an absolute pressure sensor 124. The plurality of mechanically coupled sensor cells $110_u$ may comprise only one or more differential pressure sensors as the one or more pressure sensor elements 120. For example, the sensor element 100 may comprise two mechanically coupled sensor cells 110, both fluidically coupled to a common differential pressure sensor element 120. According to an alternative example with three or more mechanically coupled sensor cells $110_u$, each sealed inner volume 118 of the three or more mechanically coupled sensor cells $110_u$ may be fluidically coupled to two differential pressure sensors, wherein two adjacent mechanically coupled sensor cells 110, share one differential pressure sensor. In accordance with the alternative example, for example, the three mechanically coupled sensor cells 110, shown in Fig. 7c may be arranged on the basis sensor cell $110_b$ with the three differential pressure sensors $120_1$, $120_3$ and 120s and without the absolute pressure sensors $120_2$, $120_4$ and $120_6$. Any other number of sensor cells 110, is possible, wherein each cell boundary 112 between two adjacent sensor cells $110_u$ is crossed by a differential pressure sensor 120. The stacking of sensor cells 110, fluidically coupled only to differential pressure sensor elements 120 above a basis sensor cell $110_b$ with an absolute pressure sensor element 124, allows to determine a horizontal component of a force applied to the sensor element 100 based on pressure information associated with the plurality of mechanically coupled sensor cells $110_u$ and to determine a vertical component of the force based on pressure information associated with the basis sensor cell $110_b$. The inventors found that with such a separation of sensor cells for detecting a horizontal force component and one or more sensor cells for detecting a vertical force component in two different layers or levels of the sensor element 100 a high resolution can be achieved.

Alternatively, it is also possible, that the sensor cells 110, on top of the basis sensor cell $110_b$ are fluidically coupled to absolute pressure sensor elements and/or differential pressure sensor elements, as described with regard to Fig. 1 to Fig. 7c.

In the embodiment shown in Fig. 8, the plurality of mechanically coupled sensor cells 110, cover the complete top wall $112_{bu}$ of the basis sensor cell $110_b$. However, this is not necessary. It is also possible that the plurality of mechanically coupled sensor cells 110, cover a smaller area or a larger area than an area of the top wall $112_{bu}$ of the basis sensor cell $110_b$.

The arrangement of multicell shear sensing on top and absolute pressure/force in bottom cell as given in Fig.8 can also be interchanged, i.e. having the directional multi-cell unit on bottom (with cylindrical or cylinder section-shape sub-cells), and a spherical or conical single absolute pressure cell on top (the smaller contact area on top cell would ensure to transfer to thus sense the shear force with the lower level sensor unit). In other words, an embodiment may be related to a sensor element 100 with a basis sensor cell $110_b$ adjacently arranged on the plurality of mechanically coupled sensor cells $110_u$, i.e. with the basis sensor cell $110_b$ being arranged on top of the plurality of mechanically coupled sensor cells $110_u$. The sensor cells 110, may be formed as, e.g., symmetric and/or equally sized, segments (sectors or sections) of a cylinder. The basis sensor cell $110_b$ may be formed as a spherical segment, hemisphere, spherical dome, cone or truncated cone (frustum). The mechanically coupled sensor cells 110, may be fluidically coupled to pressure sensor elements 120 as described with regard to Fig. 1 to 7c. Alternatively, it is also possible that the basis sensor cell $110_b$ is arranged on two mechanically coupled sensor cells 110, fluidically coupled to a common differential pressure sensor element 120.

The sensor element 100 may be implemented as a stack of two sensor cell layers with different properties, each layer comprising 1D or 2D arrangements of sensor elements (as given in Fig. 4 and 5). The lower layer comprising the basis sensor cell $110_b$ is configured for detecting high forces and the upper layer comprising the plurality of mechanically coupled sensor cells 110, is configured for detecting the forces with high resolution. Such an embodiment allows for multiscale sensing for enhancing tactile perception.

It may be advantageous, if the basis sensor cell $110_b$ is larger than the sensor cells $110_u$ of the plurality of mechanically coupled sensor cells $110_u$, e.g., in terms of the respective cell base area. For example, two or more sensor cells 110, with a small cell size, e.g., $5mm^2$, may be arranged on a basis sensor cell $110_b$ with a larger cell size, e.g., $25mm^2$. The exemplary cell sizes enable a maximum of five sensor cells on top of the basis sensor cell $110_b$. With the large basis sensor cell $110_b$ a lower spatial resolution than with the sensor cells $110_u$ of the plurality of mechanically coupled sensor cells $110_u$ may be achieved, if the top layer pressure sensor elements 120 have the same cell configuration i.e. as the bottom layer pressure sensor element 124, but at the same time the large basis sensor cell $110_b$ gets more sensitive to external force loads.

Optionally, the sensor element 100 comprises a mounting base 140 on which the basis sensor cell $110_b$ is arranged, e.g., mounted or fixed. For example, a base boundary or a bottom boundary $112_{bb}$ of the basis sensor cell $110_b$ may be fixed to the mounting base 140 or the mounting base 140 may represent the base boundary or the bottom boundary $112_{bb}$ of the basis sensor cell $110_b$. The top wall $112_{bu}$ of the basis sensor cell $110_b$ is arrange opposite to the base boundary or the bottom boundary $112_{bb}$. The plurality of mechanically coupled sensor cells $110_u$, for example, are arranged on a side of the top wall

$112_{bu}$ facing away from the mounting base 140.

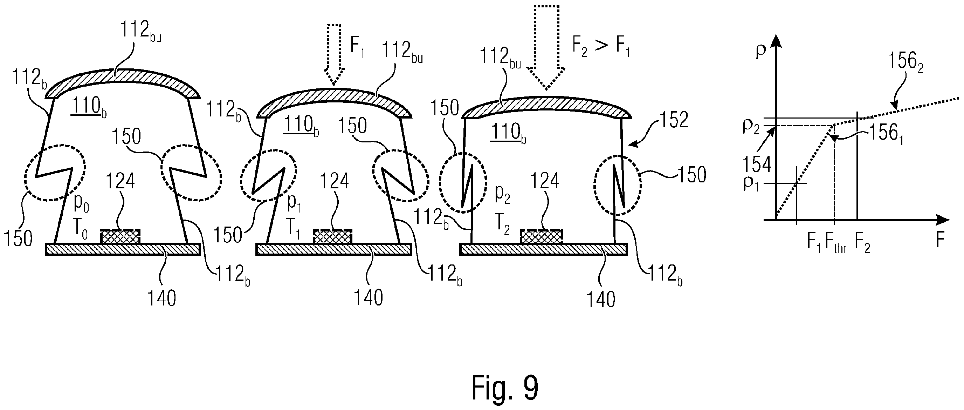

According to an embodiment, the basis sensor cell $110_b$ may be implemented as shown in Fig. 9 with a cell wall $112_b$ having a nonlinear pressure/force behavior, e.g., by a certain wall geometries, like a folding-structure 150 within the cell wall $112_b$, i.e. a foldable outer cover, or by a certain material. The folding-structure 150, for example, may completely surround the basis sensor cell $110_b$, e.g., being on all sides of the basis sensor cell $110_b$, which are perpendicular to the top wall $112_{bu}$. For example, in case of a basis sensor cell $110_b$ of cylindrical shape, the folding-structure 150 may follow a complete circle line around the outer surface of the cylinder. In case of a cube-shaped or cuboid-shaped basis sensor cell $110_b$ each of the four walls being perpendicular to the two wall $112_{bu}$ may comprise the folding-structure 150.

A cell wall, see $112_b$, for example, is bended twice, e.g., once in a first direction and once in an opposite direction, to form the folding structure 150. The bending direction goes along an axis being perpendicular to the top wall $112_{bu}$. A cell wall, see $112_b$, has a bottom-end fixed to a bottom cell boundary or to the mounting base 140 and an upper-end fixed to the top wall $112_b$, of the basis sensor cell $110_b$. Starting from the bottom-end, a first length of the cell wall $112_{bu}$ is directed to the top wall $112_{bu}$, an adjoining second length of the cell wall $112_{bu}$ is directed away from an inner volume of the basis sensor cell $110_b$ in the direction of the bottom cell boundary or of the mounting base 140 and an adjoining third length of the cell wall $112_{bu}$ is directed to the top wall $112_{bu}$ again.

The foldable outer cover, i.e. the cell wall $112_b$ with the folding-structure 150, is configured to provide a folded condition 152 of the basis sensor cell $110_b$, when a pressure within the basis sensor cell $110_b$ exceeds a pressure threshold 154, wherein the folded condition 152 results in a change from a first pressure sensitivity $156_1$ to a second, lower, pressure sensitivity $156_2$ of the basis sensor cell $110_b$. In other words the folded condition 152 may result in a change from a first pressure dependency to an increased, second pressure dependency of the basis sensor cell $110_b$. With this implementation the sensor element 100 is able to sense low force values, e.g., $F \leq F_{thr}$, with high sensitivity/high resolution, and from a certain load, e.g. threshold value $F_{thr}$, onwards the sensitivity is decreased to allow for high load measurement. The principle characteristics are given as simplified drawing in the right side diagram, where the transition between the two regimes can be tuned to be smooth and well defined in order to allow for high measurement performance over increased load force/pressure ranges.

As described above absolute pressure sensors, differential pressure sensors, e.g., located at cell boundary walls, i.e. cell boundaries 112, or a combination of absolute and differential pressure sensors is possible, allowing e.g. highly sensitive measurements, or redundancy in sensible environments (FuSa):

- Arrangement of absolute pressure sensors (see Fig. 1, Fig. 3, Fig. 5, Fig. 6 and Fig. 7a)
- Arrangement of differential pressure sensors with at least one absolute pressure sensor (see Fig. 2. Fig. 4, Fig. 7b and Fig. 7c)
- Redundant sensors in abs/diff might improve performance / robustness (see Fig. 7c)
- Stacked sensor with differential and single absolute pressure sensor (see Fig. 8)

Fig. 10 shows a sensor element 100 comprising exemplarily six mechanically coupled sensor cells 110, see $110_1$ to $110_6$. Further the sensor element 100 comprises exemplarily two absolute pressure sensors $120_1$ and $120_2$ and four differential pressure sensors $120_3$ to $120_6$ as its pressure sensor elements 120. Fig. 10 is an example of a sensor element 100 with no redundant pressure sensor elements 120. Features and/or functionalities regarding the housing and the pressure sensor elements 120 may be as described with regard to Fig. 1 - 7c. Optionally, the six mechanically coupled sensor cells 110 shown in Fig. 10 may be arranged on a basis sensor cell $110_b$, e.g., as shown in Fig. 8.

The sensor element 100 may be comprised by a herein described contact force sensor device 200, e.g., additionally or alternatively to the sensor element 100 shown in Fig. 3. The controller 210 of the contact force sensor device 200 may be configured to combine pressure values obtained/read from the pressure sensor elements 120 of the sensor element 100 of Fig. 10 to determine the contact force 202.

Optionally a sensor cell $110_6$ of the mechanically coupled sensor cells 110 comprises a temperature sensor $160_1$ for sensing a momentary temperature value in the sensor cell $110_6$. It is also possible that two or more sensor cells 110 of the mechanically coupled sensor cells 110 comprise a temperature sensor $160_1$, wherein the respective temperature sensor $160_1$ is configured to detect/sense a momentary temperature value in the respective sensor cell 110. Optionally each of the mechanically coupled sensor cells 110 of the sensor element 100 comprises a temperature sensor $160_1$. For example, every pressure sensor element 120 may have a built-in temperature sensor, e.g., for sensor calibration for temperature insensitive pressure sensing. This temperature sensor would be readable by the controller 210, in the same manner as the pressure value of the respective pressure sensor element. In case the mechanically coupled sensor cells 110 are arranged on top of a basis sensor cell, as shown in Fig. 8, it may additionally or alternatively be possible that the basis sensor cell comprises a temperature sensor $160_1$ for sensing a momentary temperature value in the basis sensor cell, e.g., a built-in temperature sensor of the absolute pressure sensor element 124. The temperature sensor $160_1$ within a sensor cell $110_6$ improves an accuracy at a determination of a force applied to the sensor element 100. This is based on the idea that a contact with an object with a different temperature or that a change of an ambient temperature changes the pressure within each sensor cell 110, which, for example, is required to be compensated for accurate contact force measurements.. Therefore, the additional information of the momentary temperature value in the respective sensor cell 110 improves an accuracy at the determination of the force.

According to an embodiment, the sensor element 100 comprises a temperature sensor $160_2$ arranged outside the sensor cells 110, e.g., arranged next to the mechanically coupled sensor cells 110. In case the mechanically coupled sensor cells 110 are arranged on a mounting base, compare Fig. 6, or in case a basis sensor cell on which the mechanically coupled sensor cells 110 may be arranged is arranged on a mounting base, compare Fig. 8, the temperature sensor $160_2$ may also be arranged on the mounting base, e.g. in the vicinity of the sensor element 100. The temperature sensor $160_2$ is configured to provide, e.g., detect or sense, a momentary temperature value of the environmental atmosphere, e.g., surrounding the mechanically coupled sensor cells 110. The temperature sensor $160_2$ outside of the sensor cells 110 may also improve an accuracy at a determination of a force applied to the sensor element 100. This is based on the idea that an outside temperature has at least partially an influence on a temperature within the sensor cells 110, for example, a hot environment may increase a temperature and thus also a pressure within the sensor cells 110 or a cold environment may reduce a temperature and thus also a pressure within the sensor cells 110. Therefore, the temperature sensor $160_2$ outside of the sensor cells 110 allows to calibrate the sensor element 100 for being able to correctly distinguish whether the detected change of a pressure within a sensor cells results from an external force or from a change of the environment. The temperature sensor $160_2$ allows to calibrate a reference pressure within the sensor cells 110.

Optionally, the sensor element 100 comprises a barometric pressure sensor 170 arranged outside the sensor cells 110, e.g., arranged next to the mechanically coupled sensor cells 110. The barometric pressure sensor 170 is configured to provide, e.g., detect or sense, a momentary atmospheric pressure value of the environmental atmosphere. The barometric pressure sensor 170 outside of the sensor cells 110 may also improve an accuracy at a determination of a force applied to the sensor element 100. This is based on the idea that a change of an outside pressure may result in change of a force applied to the sensor element 100. In order for being able to correctly distinguish whether the detected change of a pressure within a sensor cells is a result of a pressure change in the environment or a result of an external force applied to the sensor element 100 which is to be detected. The barometric pressure sensor 170 allows to compensate for all cell pressure influences from external atmospheric pressure changes.

The contact force sensor device 200 of Fig. 3 may comprise one of the sensor elements 100 shown in Fig. 6 to 10, wherein the controller 210 is configured to perform the read out and the determination of the contact force 202 exactly or similarly as described with regard to Fig. 3.

Fig. 11 shows an embodiment of a contact force sensor device 200. Exemplarily the contact force sensor device 200 is shown on a hand 300 of a robot or on an electronic glove. The contact force sensor device 200 can alternatively be implemented in or connected to any other device requesting information regarding contact forces.

The contact force sensor device 200 shown in Fig. 11, for example, comprises a plurality of sensor elements 100. The sensor elements 100 can be fixed to the hand 300 individually or as a one-dimensional or two-dimensional array of sensor elements 100. Exemplarily Fig. 11 shows such an array 180 of sensor elements fixed at a tip of the hand 300.

For example, a plurality of sensor elements 100, as described with regard to Fig. 1 to 10, could be arranged on a flexible mounting base 140. The plurality of sensor elements 100 may form an array 180 of sensor elements 100. The contact force sensor device 200 may comprise an array 180 of a plurality of spherically or hemispherically shaped sensor elements 100, each comprising sensor cells formed as segments (sectors) of a spherical segment or a hemisphere. Optionally, one or more of the sensor cells 110 may comprise a temperature sensor $160_1$ as described with regard to Fig. 10.

According to an embodiment, the flexible mounting base 140 comprises a flexible wire structure configured to connect the sensor elements 100 with an interface or with the controller 210 of the contact force sensor device 200. The flexible mounting base 140 comprising the plurality of sensor elements 100 could represent a mat. Such a mat could then cover a rigid, e.g., a curved, surface like a robotic finger or any kind of application surface.

As described with regard to Fig. 3, the controller 210 may comprise two or more processing units at distributed hierarchy levels. The controller 210 may comprise one or more local processing units which are configure for a local processing, e.g., local arrays 180 of sensor elements may be read out by separate local processing units and/or individual sensor elements 100 may be read out by separate local processing units. The one or more local processing units may be connected to an overall processing unit, e.g., a high level processing unit or an overall control system, or the one or more local processing units may be connected to a higher level touch / haptic processing unit interfacing two or more sub units, and connecting to the high level processing unit. The locality of processing / controller enables significantly reduced wiring.

The controller 210 of the contact force sensor device 200 is configured to read out a momentary pressure information 204 of the plurality of pressure sensor elements 120 of the plurality of sensor elements 120 and to determine a direction and/or magnitude of a contact force applied to at least parts of the plurality of sensor elements 120 based on the momentary pressure information 204. The momentary pressure information 204 may comprise momentary pressure values of plurality of pressure sensor elements 120 of the plurality of sensor elements 120, e.g., as a tensor. The momentary pressure information 204 may comprise per sensor element 100, e.g., per array $180_1$ of sensor cells 110, and/or per array $180_2$ of sensor elements 100 a set of momentary pressure values. The momentary pressure information 204 may indicate for each momentary pressure value the associated pressure sensor element from which the respective momentary pressure value has been read. The direction and/or magnitude of the contact force may be determined by combining momentary pressure values of the momentary pressure information 204, e.g. as described with regard to Fig. 3.

Optionally, the contact force sensor device 200 comprises a temperature sensor 160, e.g. next to one or more of the plurality of sensor elements 100, for providing a momentary temperature value of the environmental atmosphere. The temperature sensor 160 may be arranged, e.g., fixed, on a surface of an object or device, e.g., on the hand 300 of the robot, on which the sensor elements 100, e.g., the array $180_1$ of sensor cells 110, and/or the array $180_2$ of sensor elements 100 are arranged. It may also be possible that the temperature sensor 160 is arranged on a mounting base 140, see CUT A-A'. Alternatively, it is also possible that the temperature sensor 160 is an external device from which the controller 210 may obtain, e.g. receive, the momentary temperature value of the environmental atmosphere, e.g., via a wireless connection. The controller 210 is configured to determine the direction and/or magnitude, e.g. strength, of a contact force applied to one or more of the sensor elements 100 based on the read out momentary pressure information 204 and based on the momentary temperature value of the environmental atmosphere. The momentary temperature value of the environmental atmosphere, for example, is considered for compensating temperature changes or temperature effects in the sensor cells due to a warming or cooling provided by the environmental atmosphere.

Additionally, or alternatively, one or more of the sensor cells 110 of the plurality of sensor elements 100 may comprise a temperature sensor, e.g., as described with regard to Fig. 10, for sensing a momentary temperature value in the sensor cell 110 having the respective temperature sensor. The controller is configured to determine the direction and/or magnitude of the contact force applied to one or more of the sensor elements 100 based on the read out momentary pressure information 204 and based on the one or more momentary temperature values in the one or more sensor cell having a temperature sensor. The controller may obtain from each sensor cell 110 comprising a temperature sensor a momentary temperature value and consider same at the determination of the direction and/or magnitude of the contact force. Such a temperature sensor within a sensor cell is usable for compensating temperature changes or temperature effects in the respective sensor cell.

According to an embodiment the contact force sensor device 200 comprises a barometric pressure sensor 170 next to one or more of the plurality of sensor elements 100 for providing a momentary atmospheric pressure value of the environmental atmosphere. The barometric pressure sensor 170 may be arranged, e.g., fixed, on a surface of an object or device, e.g., on the hand 300 of the robot, on which the sensor elements 100, e.g., the array 180 of sensor elements 100, is arranged. It may also be possible that the barometric pressure sensor 170 is arranged on a mounting base 140, see CUT A-A'. Alternatively, it is also possible that the barometric pressure sensor 170 is an external device from which the controller 210 may obtain, e.g. receive, the momentary atmospheric pressure value of the environmental atmosphere, e.g., via a wireless connection. The controller 210, for example, is configured to determine the direction and/or magnitude, e.g. strength, of the contact force applied to one or more of the sensor elements 100 based on the read out momentary pressure information 204 and based on the momentary atmospheric pressure value of the environmental atmosphere. The momentary atmospheric pressure value of the environmental atmosphere, for example, is considered for compensating pressure changes in the sensor cells 110 due to a pressure change in the environmental atmosphere.

The controller 210 may consider, for the determination of the direction and/or the magnitude of the contact force, additionally to the momentary pressure information the momentary temperature value of the environmental atmosphere, one or more momentary temperature values each being associated with a sensor cell having a temperature sensor, and/or the momentary atmospheric pressure value of the environmental atmosphere.

The controller 210, for example, is configured to determine a distribution of contact forces over a surface area covered by the array 180 of the sensor elements. The controller 210, for example, is configured to gain a distribution of vertical forces over the array 180 and/or a distribution of shear force, e.g., components and sum, over the array 180 or a distribution of a 3D contact force distribution over the respective sensor array 180. An array 180 of sensor elements 100 enables spatially resolving 3D force sensing. The controller 210 is configured to calculate above distributions from sensor cell readouts in a way to obtain high resolution or spatial distributions of mentioned forces.

The contact force sensor device 200, for example, represents a multi-directional force and touch sensor. The herein discussed contact force sensor device 200 is configured to perform tactile and touch sensing in a robust and performant manner, to match into applications from consumer, industrial, and robotics applications. The contact force sensor device 200 enables a robust evaluation of touch interactions (feeling) and the measurement of contact forces. The contact force sensor device 200 is optimal with respect to application demands, e.g. high performance sensing with touchy human-like perception and/or multi-directional sensing capabilities. Combining multi-cell sensors, see the herein discussed sensor elements 100, into arrays 180 for local sensing of 3D force distribution in contact area (especially for "soft" or " touchy" sensors) are relevant to cover spatially resolving 3-dimensional touch interactions or tactile condition evaluations. The contact force sensor device 200 tackles the measurement of 3-dimensional contact forces on a touch / tactile interface, i.e. the flexible cover 114 of the sensor cells 110, providing 3-dimensional information on contact force arrangement (vertical force with additional shear force components in x-and y-direction) on the surface in contact.

The contact force sensor device 200 is a novel multidirectional force/touch sensor system composed from a set of sub-cells, i.e. sensor cells 110, interconnected mechanically and/or electrically. Each sensor cell 110 may be equipped with pressure sensors 120, e.g., absolute and/or differential pressure sensors. Based on the interconnected sensor principle and by combining the individual pressure measurements a robust and precise estimation of magnitude and direction of 3-dimensional touch forces, i.e. vertical and shear forces, acting on the primary mechanical touch interface, i.e. the flexible cover 114 of the sensor cells 110, is enabled.

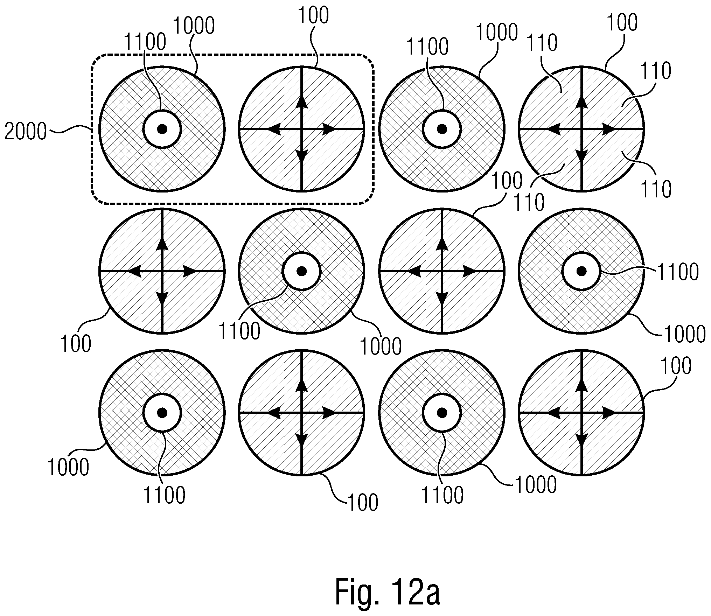

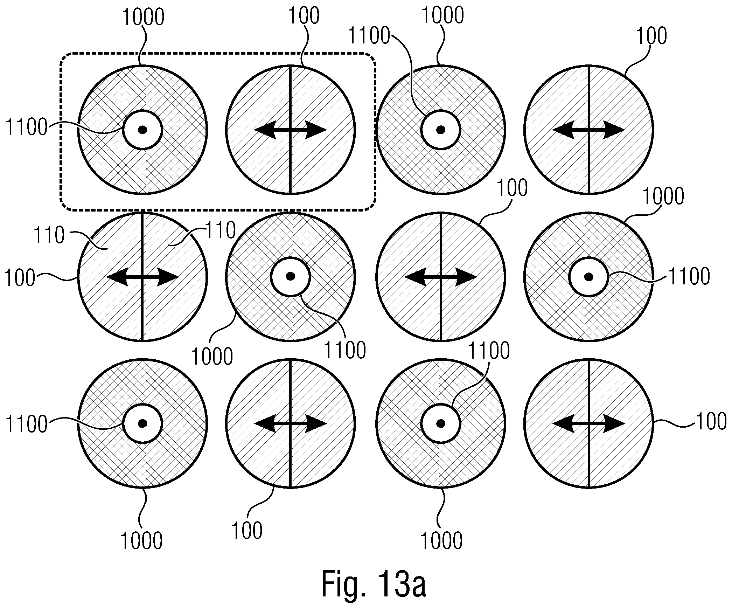

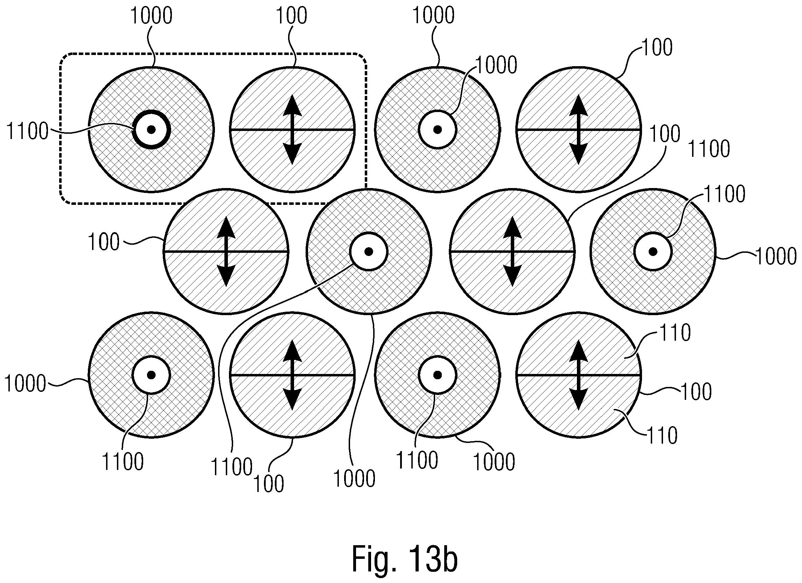

As described with regard to Fig. 4, Fig. 5 and Fig. 11, the herein described sensor elements 100 can be arranged within an array. Fig. 12a to 12c show examples of 3D Contact Force Sensor Arrays and Fig. 13a and Fig. 13b show 2D Contact Force Sensor Arrays comprising laterally (spatially) separated absolute and shear force sensors. The sensor arrays shown in Fig. 12a to 12c may comprise one or more force detection units 2000 configured for detecting a contact force in three dimensions and the sensor arrays shown in Fig. 13a and 13b may comprise one or more force detection units 2000 configured for detecting a contact force in two dimensions.

Fig. 12a shows a sensor array configured for 3D force sensing by a combination of different sensor elements, e.g., with different cell-units. The sensor array, for example, comprises one or more single-cell vertical force sensor elements 1000, i.e. one cell with one absolute pressure sensor 1100, and one or more of the herein described sensor elements 100 with at least three mechanically coupled sensor cells 110, e.g., as described with regard to Fig. 4 to Fig. 7c. The at least three mechanically coupled sensor cells 110 enable 2D shear force sensing by the respective sensor element 100. Preferably the pressure sensor elements 120 comprised by the sensor elements 100 represent differential pressure sensor elements, i.e. at each border separating two adjacent sensor cells 110 one of the differential pressure sensor elements is arranged. In this case, the sensor elements 100 may represent multi-cell shear-force sensor elements, i.e. pure shear-force sensors or pure vertical force sensors, for 2D shear force sensing. A force detection unit 2000 of the sensor array shown in Fig. 12a may comprise one single-cell vertical force sensor element 1000 and one sensor element 100 configured for detecting shear force in two dimensions. The sensor element 100, for example, may be configured to measure a shear force in a first dimension and in a second dimension, wherein the second dimension is perpendicular to the first dimension. The single-cell vertical force sensor element 1000 may be configured to measure a vertical force in a third dimension, wherein the third dimension is perpendicular to the first dimension and the second dimension.

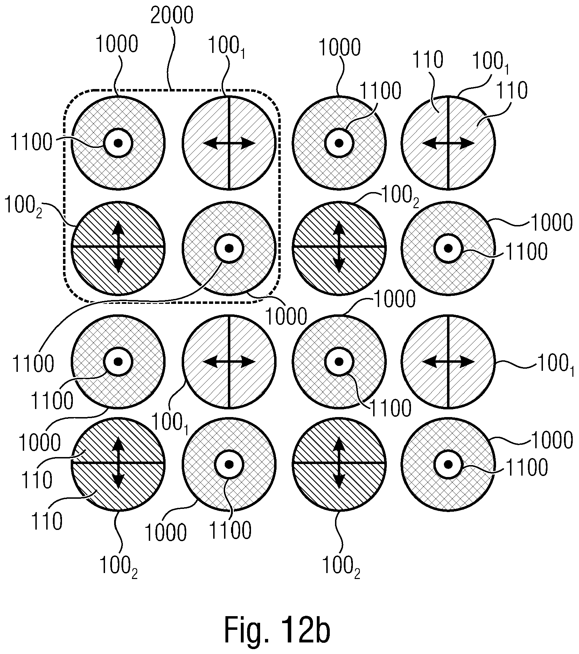

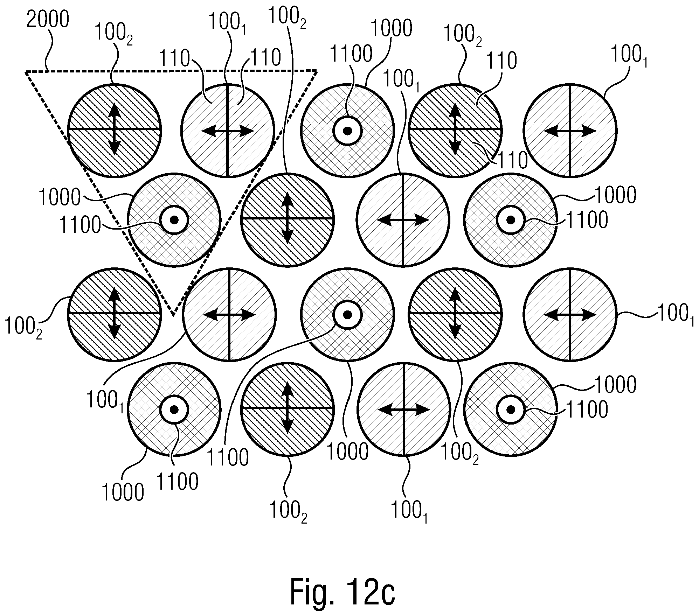

Fig. 12b and Fig. 12c show examples of an array comprising one or more single-cell vertical force sensor elements 1000, i.e. one cell with one absolute pressure sensor 1100, and two or more of the herein described sensor elements 100 with two mechanically coupled sensor cells 110, e.g., as described with regard to Fig. 1 or Fig. 2. Preferably, the sensor elements 100 comprise two mechanically coupled sensor cells 110 fluidically coupled to a common differential pressure sensor element, i.e. a two-cell sensor element 100 comprises as pressure sensor element only one differential pressure sensor element. The two mechanically coupled sensor cells 110 enable 1D shear force sensing by the respective sensor element 100. This sensor elements 100 are used in two variants, wherein a second variant $100_2$ is arranged within the array rotated by 90° with respect to the first variant $100_1$. This two variants $100_1$ and $100_2$ together enable a 2D shear force sensitivity of the array. The first variant $100_1$, for example, may be configured to measure a shear force in a first dimension and the second variant $100_2$, for example, may be configured to measure a shear force in a second dimension, wherein the second dimension is perpendicular to the first dimension. The single-cell vertical force sensor element 1000 may be configured to measure a vertical force in a third dimension, wherein the third dimension is perpendicular to the first dimension and the second dimension.

A force detection unit 2000 of the sensor array shown in Fig. 12b may comprise two single-cell vertical force sensor elements 1000, the first variant 100, of the sensor element 100 and the second variant $100_2$ of the sensor element 100. The force detection unit 2000 may comprise a 2x2 arrangement of the sensors, i.e. of 1000, 100, and $100_2$. According to an embodiment each row and column of the 2x2 arrangement may comprise one of the two single-cell vertical force sensor elements 1000 and one of the two variants 100, and $100_2$ of the sensor element 100. Such a 2x2 arrangement of the sensors improves an accuracy at a detection of a contact force in three dimensions.

A force detection unit 2000 of the sensor array shown in Fig. 12c may comprise one single-cell vertical force sensor element 1000, the first variant 100, of the sensor element 100 and the second variant $100_2$ of the sensor element 100. The three sensors may be arranged in form of a triangle within the force detection unit 2000.

The sensor array shown in Fig. 12c enables a denser arrangement of the sensors compared to the sensor array shown in Fig. 12b. Thus, a position information of a contact point within the sensor array can be determined more accurately with the sensor array shown in Fig. 12c compared to the sensor array shown in Fig. 12b.

Fig. 13a and Fig. 13b show examples of an array comprising one or more single-cell vertical force sensor elements 1000, i.e. one cell with one absolute pressure sensor 1100, and one or more of the herein described sensor elements 100 with two mechanically coupled sensor cells 110, e.g., as described with regard to Fig. 1 or Fig. 2. Preferably, the one or more sensor elements 100 comprise two mechanically coupled sensor cells 110 fluidically coupled to a common differential pressure sensor element, i.e. a two-cell sensor element 100 comprises as the pressure sensor element only one differential pressure sensor element. The two mechanically coupled sensor cells 110 enable 1D shear force sensing by the respective sensor element 100. Fig. 13a shows a sensor array with sensor elements 100 configured to measure a shear force in a first dimension and Fig. 13b shows a sensor array with sensor elements 100 configured to measure a shear force in a second dimension, wherein the second dimension is perpendicular to the first dimension. The single-cell vertical force sensor element 1000 may be configured to measure a vertical force in a third dimension, wherein the third dimension is perpendicular to the first dimension and the second dimension. Thus, the sensor array shown in Fig. 13a and the sensor array shown in Fig. 13b are configured to measure a contact force in two dimensions. The sensor array shown in Fig. 13a is configured to measure a contact force in the first dimension and in the third dimension and the sensor array shown in Fig. 13b is configured to measure a contact force in the second dimension and in the third dimension. A force detection unit 2000 of the sensor array shown in Fig. 13a and 13b may comprise one single-cell vertical force sensor element 1000 and one sensor element 100. The simpler arrangements shown in Fig. 13a and 13b might be advantageous in simple lifting applications, i.e. ware handling by grip and lift / relocate objects in industrial robotics.

Further, Fig. 13a and 13b show variants of the arrangements of the sensors within the respective sensor array. In Fig. 13a the sensors are arranged in rows and columns, which are not shifted/displaced against each other. On the contrary, in Fig. 13b rows of sensors are shifted/displaced against each other. Thus, the sensor array shown in Fig. 13b enables a denser arrangement of the sensors compared to the sensor array shown in Fig. 13a. Thus, a position information of a contact point within the sensor array can be determined more accurately with the sensor array shown in Fig. 13b compared to the sensor array shown in Fig. 13a.

Additional embodiments and aspects are described which may be used alone or in combination with the features and functionalities described herein.

According to an embodiment, a sensor element comprises a plurality of mechanically coupled sensor cells each having a sealed inner volume within an at least partially flexible cell housing, wherein the flexible cell housing comprises a flexible outer cover and flexible cell boundaries between adjacent sensor cells, and at least one pressure sensor element, wherein each sealed inner volume is fluidically coupled to at least one of the at least one pressure sensor element.

According to an embodiment, the sensor element comprises a plurality of the pressure sensor elements comprising absolute pressure sensors, and each sealed inner volume is fluidically coupled to at least one of the plurality of pressure sensor elements, and wherein each sensor cell comprises one of the absolute pressure sensors.

According to an embodiment, the at least one pressure sensor element comprises at least one differential pressure sensor, and optionally each sealed inner volume is fluidically coupled to at least one of the at least one differential pressure sensors, and wherein sealed inner volumes of two adjacent mechanically coupled sensor cells are fluidically coupled to a common differential pressure sensor.

According to an embodiment, the sensor element comprises a plurality of pressure sensor elements comprising at least one differential pressure sensor and at least one absolute pressure sensor, and each sealed inner volume is fluidically coupled to at least one of the plurality of pressure sensor elements.

According to an embodiment, the sensor element comprises two adjacent sensor cells, wherein at least one of the two adjacent sensor cells comprises an absolute pressure sensor and wherein sealed inner volumes of the two adjacent sensor cells are fluidically coupled to a common differential pressure sensor.

According to an embodiment, the sensor element further comprises a temperature sensor in at least one of the sensor cells for sensing a momentary temperature value in the sensor cell having the temperature sensor, and/or next to the sensor element for providing a momentary temperature value of the environmental atmosphere.

According to an embodiment, the sensor element further comprises a barometric pressure sensor next to the sensor element for providing a momentary atmospheric pressure value of the environmental atmosphere.

According to an embodiment, wherein the sensor cells are cube-shaped or cuboid-shaped and arranged in a two-dimensional array, or wherein the sensor cells are formed as segments of a spherical dome.

According to an embodiment, the sensor element further comprises a basis sensor cell, wherein the plurality of mechanically coupled sensor cells are adjacently arranged on the basis sensor cell.

According to an embodiment, the basis sensor cell comprises a flexible or rigid top wall having arranged thereon the plurality of mechanically coupled sensor cells, and a foldable outer cover, wherein the foldable outer cover is configured to provide an folded condition of the basis sensor cell, when the pressure to the basis sensor cell exceeds a pressure threshold, wherein the folded condition results in a change from a first pressure dependency to an increased, second pressure dependency of the basis sensor cell.

According to an embodiment, a contact force sensor device comprises the sensor element, and a controller configured to read out a momentary pressure information of the at least one pressure sensor element of the sensor element and to determine a direction and/or strength of a contact force applied to the sensor element based on the momentary pressure information.

According to an embodiment, the contact force sensor device further comprises a temperature sensor in at least one of the sensor cells for sensing a momentary temperature value in the sensor cell having the temperature sensor, and/or next to the sensor element for providing a momentary temperature value of the environmental atmosphere, wherein the controller is configured to determine the direction and/or strength of the contact force applied to the sensor element based on the read out momentary pressure information and based on the momentary temperature value in the sensor cell having the temperature sensor, and/or of the environmental atmosphere.

According to an embodiment, the contact force sensor device further comprises a barometric pressure sensor next to the sensor element for providing a momentary atmospheric pressure value of the environmental atmosphere, wherein the controller is configured to determine the direction and/or strength of the contact force applied to the sensor element based on the read out momentary pressure information and based on the momentary atmospheric pressure value of the environmental atmosphere.

According to an embodiment, the contact force sensor device further comprises an array comprising the sensor elements, wherein the controller is configured to read out momentary pressure values of the pressure sensor elements of the sensor elements to obtain the momentary pressure information and to determine the direction and/or strength of the contact force applied to the sensor elements based on the read out momentary pressure information.

According to an embodiment, the controller is configured to determine a distribution of contact forces over a surface area covered by the array of the sensor elements.

According to an embodiment, the contact force sensor device further comprises a cover layer arranged on the array, wherein the cover layer is configured to mechanically couple the sensor elements of the array.

Although some aspects have been described as features in the context of an apparatus it is clear that such a description may also be regarded as a description of corresponding features of a method. Although some aspects have been described as features in the context of a method, it is clear that such a description may also be regarded as a description of corresponding features concerning the functionality of an apparatus.

In the foregoing detailed Description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus the following claims are hereby incorporated into the Detailed Description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

The above described embodiments are merely illustrative for the principles of the present embodiments. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Sensor element (100), comprising

   a plurality of mechanically coupled sensor cells (110) each having a sealed inner volume (118) within an at least partially flexible cell housing, wherein the flexible cell housing comprises a flexible outer cover (114) and flexible cell boundaries (112) between adjacent sensor cells (110), and

at least one pressure sensor element (120), wherein each sealed inner volume (118) is fluidically coupled to at least one of the at least one pressure sensor element (120).

2. The sensor element (100) of claim 1, comprising a plurality of the pressure sensor elements (120) comprising absolute pressure sensors, and each sealed inner volume (118) is fluidically coupled to at least one of the plurality of pressure sensor elements (120), and wherein each sensor cell comprises one of the absolute pressure sensors.

3. The sensor element (100) of claim 1 or claim 2, wherein the at least one pressure sensor element (120) comprises at least one differential pressure sensor, and wherein sealed inner volumes (118) of two adjacent mechanically coupled sensor cells (110) are fluidically coupled to a common differential pressure sensor.

4. The sensor element (100) of claim 1, comprising a plurality of pressure sensor elements (120) comprising at least one differential pressure sensor and at least one absolute pressure sensor, and each sealed inner volume (118) is fluidically coupled to at least one of the plurality of pressure sensor elements (120).

5. The sensor element (100) of claim 4, comprising two adjacent sensor cells (110), wherein at least one of the two adjacent sensor cells (110) comprises an absolute pressure sensor and wherein sealed inner volumes (118) of the two adjacent sensor cells (110) are fluidically coupled to a common differential pressure sensor.

6. The sensor element (100) of any of the preceding claims, further comprising a temperature sensor (160) in at least one of the sensor cells (110) for sensing a momentary temperature value in the sensor cell (110) having the temperature sensor, and/or next to the sensor element (100) for providing a momentary temperature value of the environmental atmosphere.

7. The sensor element (100) of any of the preceding claims, further comprising: a barometric pressure sensor (170) next to the sensor element (100) for providing a momentary atmospheric pressure value of the environmental atmosphere.

8. The sensor element (100) of any of the preceding claims, wherein the sensor cells (110) are formed as segments of a spherical dome.

9. The sensor element (100) of any of the preceding claims, further comprising a basis sensor cell (110$_b$), wherein the plurality of mechanically coupled sensor cells (110) are adjacently arranged on the basis sensor cell (110$_b$).

10. The sensor element (100) of claim 9, wherein the basis sensor cell (110$_b$) comprises a flexible or rigid top wall (112$_{bu}$) having arranged thereon the plurality of mechanically coupled sensor cells (110$_u$), and an outer cover (112$_b$) with a nonlinear pressure/force behaviour, wherein the outer cover (112$_b$) is configured to provide an first condition of the basis sensor cell (110$_b$), when the pressure to the basis sensor cell (110$_b$) exceeds a pressure threshold (154), wherein the first condition results in a change from a first pressure dependency to an increased, second pressure dependency of the basis sensor cell (110$_b$).

11. A contact force sensor device (200) comprising:

the sensor element (100) according to any of the preceding claims, and
a controller (210) configured to read out a momentary pressure information (204) of the at least one pressure sensor element (120) of the sensor element (100) and to determine a direction and/or strength of a contact force (202) applied to the sensor element (100) based on the momentary pressure information (204).

12. The contact force sensor device (200) of claim 11, further comprising:

a temperature sensor (160)

in at least one of the sensor cells (110) for sensing a momentary temperature value in the sensor cell having the temperature sensor, and/or
next to the sensor element (100) for providing a momentary temperature value of the environmental atmosphere,

wherein the controller (210) is configured to determine the direction and/or strength of the contact force (202) applied to the sensor element (100) based on the read out momentary pressure information and based on the momentary temperature value

in the sensor cell (110) having the temperature sensor, and/or
of the environmental atmosphere.

13. The contact force sensor device (200) of claims 11 or claim 12, further comprising:

a barometric pressure sensor (170) next to the sensor element (100) for providing a momentary atmospheric pressure value of the environmental atmosphere,
wherein the controller (210) is configured to determine the direction and/or strength of the contact force (202) applied to the sensor element (100) based on the read out momentary pressure information (204) and based on the momentary atmospheric pressure value of the environmental atmosphere.

14. The contact force sensor device (200) of any of claims 11 to 13, further comprising:

an array (180) comprising the sensor elements (100) according to any of the preceding claims, wherein the controller (210) is configured to read out momentary pressure values of the pressure sensor elements (120) of the sensor elements (100) to obtain the momentary pressure information (204) and to determine the direction and/or strength of the contact force (202) applied to the sensor elements (100) based on the read out momentary pressure information (204).

15. The contact force sensor device (200) of claim 14, wherein the controller (210) is configured to determine a distribution of contact forces over a surface area covered by the array ($160_2$) comprising the sensor elements (100).

16. The contact force sensor device (200) of claim 14 or 15, comprising a cover layer arranged on the array (180) comprising the sensor elements (100), wherein the cover layer is configured to mechanically couple the sensor elements (100) of the array (180).

Fig. 1

EP 4 492 028 A1

Fig. 2

Fig. 3

EP 4 492 028 A1

Fig. 4

Fig. 5

Fig. 6

Fig. 7a

Fig. 7b

Fig. 7c

EP 4 492 028 A1

Fig. 8

Fig. 9

EP 4 492 028 A1

Fig. 10

EP 4 492 028 A1

Fig. 11

EP 4 492 028 A1

Fig. 12a

Fig. 12b

Fig. 12c

Fig. 13a

EP 4 492 028 A1

Fig. 13b

FIGURE FOR ABSTRACT

Fig. 1

EP 4 492 028 A1

# EUROPEAN SEARCH REPORT

Application Number

EP 23 18 4955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0034990 A (UNIV CHUNG ANG IND ACAD COOP FOUND [KR]) 21 March 2022 (2022-03-21) * abstract * * figures 1-3,8-9 * * paragraphs [0001] – [0080] * | 1-16 | INV. G01L5/16 G01L5/22 G01L19/00 B25J13/08 |
| X | US 2018/356301 A1 (TOMITA YOSHIHIRO [JP] ET AL) 13 December 2018 (2018-12-13) * abstract * * figures 1-8 * * paragraphs [0007] – [0011], [0023] – [0027], [0033] – [0117] * | 1,2 | |
| X | US 2012/247217 A1 (SUZUKI HIRONORI [JP]) 4 October 2012 (2012-10-04) * abstract * * figures 3A,3B,6c,10c * * paragraphs [0084] – [0114] * | 1,2 | |
| X | US 2020/300598 A1 (KIM SANGBAE [US] ET AL) 24 September 2020 (2020-09-24) * abstract; claims 1-2,8,12 * * figures 1-6 * * paragraphs [0003] – [0006], [0020] – [0049] * | 1,2,11 | TECHNICAL FIELDS SEARCHED (IPC) G01L B25J |
| X | US 2002/092364 A1 (ADDERTON DENNIS M [US] ET AL) 18 July 2002 (2002-07-18) * abstract * * figures 4,5,22,23 * * paragraphs [0003], [0014] – [0019], [0045] – [0101] * * claims 1-6 * | 1,2 | |
| A | US 10 316 635 B2 (SHELL OIL CO [US]) 11 June 2019 (2019-06-11) * column 2, paragraph 41-51 * * abstract * | 1-16 | |

The present search report has been drawn up for all claims

| Place of search | Date of completion of the search | Examiner |
|---|---|---|
| The Hague | 11 December 2023 | Mouanda, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

39

## ANNEX TO THE EUROPEAN SEARCH REPORT
## ON EUROPEAN PATENT APPLICATION NO.

EP 23 18 4955

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2023

| Patent document cited in search report | | | Publication date | Patent family member(s) | | Publication date |
|---|---|---|---|---|---|---|
| KR 20220034990 | A | | 21-03-2022 | NONE | | |
| US 2018356301 | A1 | | 13-12-2018 | JP | 6861358 B2 | 21-04-2021 |
| | | | | JP | 2019002905 A | 10-01-2019 |
| | | | | US | 2018356301 A1 | 13-12-2018 |
| US 2012247217 | A1 | | 04-10-2012 | JP | 5708214 B2 | 30-04-2015 |
| | | | | JP | 2012215533 A | 08-11-2012 |
| | | | | US | 2012247217 A1 | 04-10-2012 |
| | | | | US | 2013331978 A1 | 12-12-2013 |
| US 2020300598 | A1 | | 24-09-2020 | US | 2020300598 A1 | 24-09-2020 |
| | | | | WO | 2020190311 A1 | 24-09-2020 |
| US 2002092364 | A1 | | 18-07-2002 | AU | 2894202 A | 11-06-2002 |
| | | | | EP | 1344023 A1 | 17-09-2003 |
| | | | | US | 6951143 B1 | 04-10-2005 |
| | | | | US | 2002092364 A1 | 18-07-2002 |
| | | | | WO | 0244655 A1 | 06-06-2002 |
| US 10316635 | B2 | | 11-06-2019 | CA | 2928565 A1 | 30-10-2016 |
| | | | | US | 2016319659 A1 | 03-11-2016 |

EPO FORM P0459

For more details about this annex : see Official Journal of the European Patent Office, No. 12/82